# EUROPÄISCHE PATENTSCHRIFT

(11) **EP 2 876 273 B1**
(45) Veröffentlichungstag und Bekanntmachung des Hinweises auf die Patenterteilung: **04.01.2017**
(21) Anmeldenummer: 13194096.7
(22) Anmeldetag: 22.11.2013
(51) Int. Cl.: F01N 13/18, F16L 11/12, F16L 53/00

(54) **Verbindungsaggregat aus einer beheizbaren Kraftfahrzeugleitung und einem beheizbaren Verbinder**
Connection unit for a heatable motor vehicle conduit and a heatable connector
Module de liaison constitué d'une conduite de véhicule automobile pouvant être chauffée et d'un connecteur pouvant être chauffé

(43) Veröffentlichungstag der Anmeldung: 27.05.2015
(73) Patentinhaber: TI Automotive (Heidelberg) GmbH, 69123 Heidelberg (DE)
(72) Erfinder: JENSEN Hans, D-73265 Dettingen unter Teck (DE); KNOBLOCH Harald, D-69121 Heidelberg (DE)
(74) Vertreter: Rohmann, Michael

(56) Entgegenhaltungen:
- EP-A1- 0 616 166
- DE-A1-102005 048 943
- DE-U1-202009 012 230
- US-A1- 2013 108 250

## Beschreibung

Die Erfindung betrifft ein Verbindungsaggregat aus einer beheizbaren Kraftfahrzeugleitung für die Durchleitung eines fluiden Mediums und einem beheizbaren Verbinder für die Verbindung mit der Kraftfahrzeugleitung. Es liegt im Rahmen der Erfindung, dass das durch die Kraftfahrzeugrohrleitung hindurchgeleitete fluide Medium erwärmt bzw. temperiert wird. Dabei handelt es sich vor allem um ein zu erwärmendes bzw. zu temperierendes flüssiges Medium. - Statt des Begriffes Kraftfahrzeugrohrleitung wird nachfolgend auch verkürzt der Begriff Rohrleitung verwendet. - Mit dem Verbinder kann die Rohrleitung an eine weitere Rohrleitung angeschlossen werden oder an eine andere Komponente, beispielsweise einen Tank für ein fluides Medium oder dergleichen. Als Verbinder wird nach besonders bevorzugter Ausführungsform der Erfindung ein Schnellverbinder (sogenannter Quick Connector) eingesetzt. Der erfindungsgemäße Verbinder bzw. Schnellverbinder ist nach besonders empfohlener Ausführungsform für eine lösbare Verbindung mit einer weiteren Komponente beziehungsweise mit einer weiteren Rohrleitung ausgelegt.

Verbindungsaggregate der eingangs genannten Art sind aus der Praxis grundsätzlich in unterschiedlichen Ausführungsformen bekannt. So ist es bekannt, eine zu erwärmende bzw. zu temperierende wässrige Harnstofflösung im Rahmen eines SCR-Systems (SCR: Selective Catalytic Reduction) durch eine Kraftfahrzeugrohrleitung und auch durch einen daran angeschlossenen Verbinder zu leiten. In Kraftfahrzeugen, insbesondere in Kraftfahrzeugen mit Dieselmotor, ist in der Regel ein SCR-System mit einem SCR-Katalysator für die Abgasbehandlung vorhanden. Zwecks einer wirksamen Reduzierung der im Abgas eines Kraftfahrzeuges enthaltenen Stickoxide wird dem Abgas vor dem SCR-Katalysator eine Harnstofflösung zudosiert. Eine solche Harnstofflösung bzw. wässrige Harnstofflösung hat den Nachteil, dass Harnstoff bei Temperaturen unter-11 °C gefriert und teilweise auskristallisiert. Dadurch wird eine weitere funktionssichere Zufuhr der Harnstofflösung behindert oder sogar vollständig blockiert. Dann wird eine effektive Reduzierung der Stickoxide im Abgas beeinträchtigt bzw. verhindert. Zur Vermeidung solcher Störungen ist es bekannt die Kraftfahrzeugrohrleitungen für die Harnstofflösung zu beheizen. Die Beheizung der Kraftfahrzeugrohrleitung und eines daran angeschlossenen Verbinders erfolgt bei bekannten Systemen als elektrische Beheizung und zu diesem Zweck werden ein oder mehrere Heizdrähte an der Kraftfahrzeugleitung bzw. an dem Verbinder angeordnet. Viele bekannte Verbindungsaggregate haben den Nachteil, dass eine ausreichend effektive Temperierung bzw. Erwärmung des fluiden Mediums entweder nur unzureichend stattfindet oder nur mit aufwändigen bzw. kostenaufwändigen Maßnahmen möglich ist. Fernerhin sind die Verbindungen zwischen den Heizleitern der Kraftfahrzeugrohrleitung und den Heizleitern des Verbinders in der Regel aufwändig ausgeführt und außerdem störanfällig bzw. gegenüber mechanischen Beanspruchungen labil. Im Ergebnis sind die bekannten Verbindungsaggregate verbesserungsfähig.

Aus EP 0 616 166 A1 sind beheizte fluidführende Rohrleitungen bekannt, die mithilfe eines winkelförmigen Verbinders miteinander verbunden werden können. Auch der Verbinder ist beheizt und die Heizleiter der Rohrleitungen stehen in Kontakt mit den Heizleitern des Verbinders. Dieser Kontakt wird beim Verbinden der Rohrleitungen mit dem Verbinder hergestellt. Die elektrische Kontaktierung zwischen Verbinder einerseits und Rohrleitungen andererseits lässt allerdings zu wünschen übrig.

Der Erfindung liegt das technische Problem zugrunde, ein Verbindungsaggregat der eingangs genannten Art anzugeben, bei dem die vorstehend geschilderten Nachteile funktionssicher vermieden werden können und das vor allem eine effektive Beheizung bei nichtsdestoweniger geringem Aufwand bzw. Kostenaufwand gewährleistet.

Zur Lösung dieses technischen Problems lehrt die Erfindung ein Verbindungsaggregat aus einer beheizbaren Kraftfahrzeugrohrleitung für die Durchleitung und Beheizung eines fluiden Mediums und einem beheizbaren Verbinder für die Verbindung bzw. für die unmittelbare Verbindung mit der Kraftfahrzeugrohrleitung, wobei die Rohrleitung zumindest einen flächigen Heizleiter aufweist, wobei sich der zumindest eine flächige Heizleiter über die Länge der Rohrleitung erstreckt bzw. sich im Wesentlichen über die Länge der Rohrleitung erstreckt und sich bis in einen Verbindungsabschnitt der Rohrleitung für die Verbindung mit dem Verbinder erstreckt,
wobei der zumindest eine flächige Heizleiter am Verbindungsabschnitt der Rohrleitung einen elektrischen Kontaktbereich aufweist und wobei beim Verbinden der Rohrleitung mit dem Verbinder bzw. beim Zusammenschieben und/oder Zusammenstecken von Rohrleitung und Verbinder der elektrische Kontaktbereich der Rohrleitung in elektrisch leitenden Berührungskontakt bzw. unmittelbar in elektrisch leitenden Berührungskontakt mit zumindest einer elektrischen Kontaktstelle des Verbinders oder einer im Zuge des Verbindens von Rohrleitung und Verbinder an bzw. auf dem Verbindungsabschnitt aufgebrachten Verbindungshülse kommt,
wobei beim Herstellen der Verbindung zwischen Verbinder und Rohrleitung ein Dorn des Verbinders in das Innere der Rohrleitung einschiebbar bzw. einsteckbar ist, wobei beim Einschieben bzw. beim Einstecken des Dorns der Kontaktbereich nach außen gedrückt bzw. gebogen wird, so dass der elektrische Berührungskontakt des Kontaktbereiches mit den elektrischen

Kontaktstellen des Verbinders bzw. der Verbindungshülse ermöglicht bzw. erleichtert wird und wobei der Dorn an seiner Außenseite sägezahnförmige Profilierungen aufweist, wobei die Profilierungen das Drücken bzw. Schieben des ersten und/oder des zweiten Kontaktbereiches nach außen unterstützen bzw. vereinfachen. - Wie weiter unten noch erläutert, weist die Rohrleitung nach besonders bevorzugter Ausführungsform zumindest zwei flächige Heizleiter auf.

Es liegt im Rahmen der Erfindung, dass das fluide Medium durch die Kraftfahrzeugrohrleitung und durch den Verbinder hindurchgeleitet wird. Die erfindungsgemäße Kraftfahrzeugrohrleitung kann an ihren beiden Enden einen Verbindungsabschnitt bzw. einen angeschlossenen Verbinder aufweisen. Wie oben bereits dargelegt wird als Verbinder nach besonders bevorzugter Ausführungsform der Erfindung ein Schnellverbinder bzw. Quick Connector eingesetzt. Die an einen solchen Schnellverbinder bzw. Quick Connector angeschlossene weitere Rohrleitung oder das daran angeschlossene Aggregat kann auf einfache und zügige Weise von dem Schnellverbinder gelöst werden. - Empfohlenermaßen weist die Kraftfahrzeugleitung einen kreisförmigen Querschnitt bzw. einen im Wesentlichen kreisförmigen Querschnitt auf.

Heizleiter meint im Rahmen der Erfindung einen elektrischen Leiter, der bei Durchleitung eines elektrischen Stromes zur Beheizung - im vorliegenden Fall des fluiden Mediums - genutzt werden kann. Flächiger Heizleiter meint im Rahmen der Erfindung einen Heizleiter, dessen Breite deutlich größer ist als die Dicke des Heizleiters. Vorzugsweise ist die Breite des Heizleiters zumindest dreimal, bevorzugt zumindest viermal und besonders bevorzugt zumindest fünfmal so groß wie die Dicke des Heizleiters.

Es liegt im Rahmen der Erfindung, dass eine Harnstofflösung bzw. eine wässrige Harnstofflösung für ein Katalysatorsystem des Kraftfahrzeuges als fluides Medium durch die Rohrleitung und zweckmäßigerweise auch durch den Verbinder geleitet wird. Der Einsatz einer Harnstofflösung bzw. wässrigen Harnstofflösung im Rahmen eines SCR-Systems eines Kraftfahrzeuges wurde bereits oben erläutert.

Es liegt weiterhin im Rahmen der Erfindung, dass die Rohrleitung eine Innenschicht aufweist, die in Kontakt mit dem durch die Rohrleitung geleiteten fluiden Medium steht. Die Innenschicht kann beispielsweise aus einem Fluorpolymer bestehen bzw. im Wesentlichen aus einem Fluorpolymer bestehen. Fernerhin kann die Innenoberfläche der Innenschicht leitfähig eingerichtet sein, insbesondere durch Leitfähigkeitszusätze in dem Kunststoff der Innenschicht. - Es liegt fernerhin im Rahmen der Erfindung, dass die Rohrleitung zumindest eine Außenschicht aufweist und dass der zumindest eine flächige Heizleiter zwischen der Innenschicht und der Außenschicht der Rohrleitung angeordnet ist. Die Außenschicht gewährleistet insbesondere einen Schutz bzw. einen mechanischen Schutz des zumindest einen Heizleiters. Zweckmäßigerweise ist die Kraftfahrzeugrohrleitung mit einer thermischen Isolierungsschicht ausgestattet, die bevorzugt an der Außenseite der Außenschicht der Rohrleitung angeordnet ist. Fernerhin kann die Kraftfahrzeugrohrleitung mit einer äußeren Schutzschicht versehen sein, die die Rohrleitung insbesondere vor äußeren mechanischen Beanspruchungen schützt. Gemäß einer Ausführungsform der Erfindung ist bei der Kraftfahrzeugrohrleitung von innen nach außen die folgende Schichtenfolge realisiert: Innenschicht - flächiger bzw. flächige Heizleiter - Außenschicht - thermische Isolierungsschicht - äußere Schutzschicht. Die thermische Isolierungsschicht kann entsprechend einer Ausführungsvariante als Luftschicht ausgebildet sein.

Nach besonders bevorzugter Ausführungsform, der im Rahmen ganz besondere Bedeutung zukommt, ist der zumindest eine flächige Heizleiter als Heizleiterschicht der Rohrleitung ausgebildet. Heizleiterschicht meint dabei insbesondere, dass die Schicht elektrisch leitfähig und die Rohrleitung beheizend ausgebildet ist. Die Ausbildung des zumindest einen flächigen Heizleiters als Schicht bzw. Heizleiterschicht, die das von dem fluiden Medium durchströmte Innere der Rohrleitung umgibt, hat sich im Rahmen der Erfindung besonders bewährt. Zweckmäßigerweise erstreckt sich eine Heizleiterschicht über die gesamte Länge der Rohrleitung bzw. im Wesentlichen über die gesamte Länge der Rohrleitung. Es liegt im Rahmen der Erfindung, dass eine Heizleiterschicht zumindest über einen Teil des Umfangs der Rohrleitung und nach einer Ausführungsform über den gesamten Umfang der Rohrleitung umläuft. Vorzugsweise läuft eine Heizleiterschicht über zumindest ein Achtel, bevorzugt über zumindest ein Siebtel und besonders bevorzugt über zumindest ein Sechstel des Umfangs der Rohrleitung um. Es liegt dabei im Rahmen der Erfindung, dass eine Heizleiterschicht parallel bzw. im Wesentlichen parallel zur Längsrichtung der Rohrleitung verläuft. Heizleiterschicht meint im Rahmen der Erfindung insbesondere, dass das die Heizleiterschicht bildende Material homogen bzw. im Wesentlichen homogen in der Heizleiterschicht verteilt ist. Insoweit unterscheidet sich eine erfindungsgemäße Heizleiterschicht beispielsweise von einem Aggregat aus einer Mehrzahl von Heizleiterdrähten oder dergleichen.

Eine besonders bevorzugte Ausführungsform der Erfindung ist dadurch gekennzeichnet, dass die Rohrleitung zumindest einen ersten flächigen Heizleiter und zumindest einen zweiten flächigen Heizleiter aufweist, wobei sich die beiden Heizleiter über die Länge der Rohrleitung erstrecken bzw. sich im Wesentlichen über die Länge der Rohrleitung erstrecken und sich bis in den Verbindungsabschnitt der Rohrleitung für die Verbindung mit dem Verbinder erstrecken, wobei die beiden Heizleiter am Verbindungsabschnitt der Rohrleitung jeweils einen elektrischen Kontaktbereich aufweisen und wobei beim Verbinden der Rohrleitung mit dem Verbinder bzw. beim Zusammenschieben und/oder Zusammenstecken von Rohrleitung und Verbinder die beiden elektrischen Kontaktbereiche der Rohrleitung in elektrisch leitenden Berührungskontakt mit zumindest zwei elektrischen Kontaktstellen des Verbinders oder einer im Zuge des Verbindens von Rohrleitung und Verbinder an bzw. auf dem Verbindungsabschnitt aufgebrachten Verbindungshülse kommen. Es liegt dabei im Rahmen der Erfindung, dass der zumindest eine erste flächige Heizleiter als Heizleiterschicht der Rohrleitung ausgebildet ist und/oder dass der zumindest eine zweite flächige Heizleiter als zweiter Heizleiterschicht der Rohrleitung ausgebildet ist.

Gemäß einer Ausführungsform der Erfindung sind die Heizleiterschichten in Bezug auf die Schichtenfolge der Rohrleitung als innere Heizleiterschicht und als äußere Heizleiterschicht ausgebildet. Dabei umgibt die äußere Heizleiterschicht die innere Heizleiterschicht. Es wurde bereits oben dargelegt, dass nach bevorzugter Ausführungsform der Erfindung eine Innenschicht der Rohrleitung vorgesehen ist, die in Kontakt mit dem durch die Rohrleitung geleiteten fluiden Medium steht. Nach einer Ausführungsvariante der Erfindung ist die innere Heizleiterschicht der Innenschicht der Rohrleitung benachbart bzw. unmittelbar benachbart. Es wurde oben dargelegt, dass nach empfohlener Ausführungsform der Erfindung eine Außenschicht vorgesehen ist, die die Heizleiter und somit gemäß bevorzugter Ausführungsform die innere und die äußere Heizleiterschicht umgibt. Nach einer Ausführungsvariante schließt die Außenschicht an die äußere Heizleiterschicht bzw. unmittelbar an die äußere Heizleiterschicht an. - Es empfiehlt sich, dass zwischen der ersten Heizleiterschicht und der zweiten Heizleiterschicht zumindest eine Trennschicht bzw. eine zumindest elektrisch isolierende Trennschicht zwischengeschaltet ist. Auf diese Weise wird sichergestellt, dass keine elektrisch leitfähige Verbindung zwischen den beiden Heizleiterschichten vorliegt.

Gemäß einer anderen bevorzugten Ausführungsform der Erfindung sind zumindest zwei Heizleiterschichten in der gleichen Umfangsebene der Rohrleitung angeordnet. Die zumindest zwei Heizleiterschichten sind dann also in Umfangsrichtung nebeneinander angeordnet und vorzugsweise nicht übereinander angeordnet. Diese Ausführungsform bietet sich insbesondere - aber nicht ausschließlich - an, wenn nach einer empfohlenen Ausführungsvariante die Heizleiterschichten mittels eines Druckverfahrens aufgebracht werden. Das wird weiter unten noch erläutert.

Nach einer Ausführungsform der Erfindung besteht die zumindest eine Heizleiterschicht bzw. die erste und/oder die zweite Heizleiterschicht aus metallischem Material bzw. im Wesentlichen aus metallischem Material. Vorzugsweise ist dabei zumindest eine Heizleiterschicht bzw. sind zumindest zwei Heizleiterschichten als Metallfolie bzw. als Metallfilm ausgebildet. - Nach einer anderen Ausführungsform besteht zumindest eine Heizleiterschicht bzw. die erste Heizleiterschicht und/oder die zweite Heizleiterschicht aus zumindest einem leitfähigen Polymer bzw. aus zumindest einem leitfähigen Kunststoff. Es liegt im Rahmen der Erfindung, dass dem Polymer bzw. dem Kunststoff Leitfähigkeitszusätze zugefügt sind, so dass eine elektrische Leitfähigkeit bzw. eine Beheizungsfähigkeit des/der Heizleiter bzw. der Heizleiterschicht/Heizleiterschichten resultiert.

Gemäß einer bevorzugten Ausführungsform der Erfindung wird die zumindest eine Heizleiterschicht bzw. werden die Heizleiterschichten durch Aufdrucken mittels eines Druckverfahrens auf der Rohrleitung aufgebracht. Das Aufdrucken der Heizleiterschicht bzw. der Heizleiterschichten kann dabei beispielsweise mittels eines Tintenstrahldruckverfahrens und/oder mittels eines Siebdruckverfahrens erfolgen. Es liegt dabei im Rahmen der Erfindung, dass durch das Aufdruckverfahren eine Schichtdicke der Heizleiterschicht/der Heizleiterschichten realisiert wird, die die benötigte Heizleistung möglich macht, insbesondere eine Heizleistung von 10 bis 20 W/m. Bei den mittels des Druckverfahrens aufgebrachten Materialien kann es sich zum Beispiel um leitfähige Polymere handeln. Es können Pasten bzw. Dispersionen mit integrierten leitfähigen Partikeln verwendet werden. - Insbesondere beim Aufbringen von mehreren Heizleiterschichten mittels eines Druckverfahrens können die Schichten - wie oben bereits dargelegt - in einer Umfangsebene nebeneinander angeordnet sein. Es liegt dabei im Rahmen der Erfindung, dass zwischen den - zweckmäßigerweise sich in Längsrichtung der Rohrleitung erstreckenden - Heizleiterschichten bzw. Heizleiterschichtbahnen Zwischenräume angeordnet sind, so dass keine elektrisch leitfähige Verbindung zwischen den Heizleiterschichten vorliegt. Die Heizleiterschichten bzw. Heizleiterschichtbahnen sind zweckmäßigerweise im Endbereich des Verbindungsaggregates in Reihe oder in Serie geschaltet. Gemäß einer Ausführungsform sind die Heizleiterschichten/Heizleiterschichtbahnen bzw. die bevorzugt nebeneinander angeordneten Heizleiterschichten/Heizleiterschichtbahnen in Längsrichtung der Rohrleitung nicht vollflächig durchgehend realisiert. Insoweit können auch laterale Strukturen wie ein mäanderförmiger Verlauf von Heizleiterschichtabschnitten verwirklicht werden. Dabei sind die Heizleiterschichtabschnitte einer Heizleiterschicht in Längsrichtung der Rohrleitung leitend miteinander verbunden. Auf diese Weise können relativ einfach bestimmte Widerstandswerte bzw. Heizleistungen pro Längeneinheit der Rohrleitung eingestellt werden.

Gemäß empfohlener Ausführungsform der Erfindung ist ein den ersten elektrischen Kontaktbereich bildendes bzw. aufweisendes erstes Heizsegment des ersten flächigen Heizleiters bzw. der ersten Heizleiterschicht in dem Verbindungsabschnitt der Rohrleitung an der Außenoberfläche der Rohrleitung bzw. des Verbindungsabschnittes angeordnet. Zweckmäßigerweise ist das erste Heizsegment bzw. der erste elektrische Kontaktbereich (vor dem Verbinden mit dem Verbinder bzw. mit der Verbindungshülse) nach außen hin frei und unbedeckt bzw. unbeschichtet ausgebildet. Weiterhin ist nach empfohlener Ausführungsform der Erfindung ein den zweiten elektrischen Kontaktbereich bildendes bzw. aufweisendes zweites Heizsegment des zweiten flächigen Heizleiters bzw. der zweiten Heizleiterschicht im Verbindungsabschnitt der Rohrleitung an der Außenoberfläche der Rohrleitung bzw. des Verbindungsabschnittes angeordnet. Es liegt auch hier im Rahmen der Erfindung, dass das zweite Heizsegment bzw. der zweite elektrische Kontaktbereich (vor dem Verbinden mit dem Verbinder bzw. mit der Verbindungshülse) nach außen hin frei und unbedeckt bzw. unbeschichtet ausgebildet ist. Diese freie und unbedeckte/unbeschichtete Ausführung der Heizsegmente bzw. der elektrischen Kontaktbereiche gewährleistet eine einfache Herstellung eines elektrischen Kontaktes beim Zusammenschieben bzw. Zusammenstecken der Rohrleitung und des Verbinders und optional der Verbindungshülse. Vorstehend wurde insbesondere eine Ausführungsform mit zwei flächigen Heizleitern bzw. mit zwei Heizleiterschichten erläutert. Die diesbezüglichen Ausführungen gelten aber auch für Rohrleitungen mit mehr als zwei flächigen Heizleitern bzw. Heizleiterschichten bzw. Heizleiterschichtbahnen. Das gilt ebenso für die nachfolgenden Ausführungen.

Gemäß einer Ausführungsvariante der Erfindung sind im Verbindungsabschnitt der Rohrleitung das erste Heizsegment des ersten flächigen Heizleiters bzw. der ersten Heizleiterschicht und das zweite Heizsegment des zweiten flächigen Heizleiters bzw. der zweiten Heizleiterschicht stufenförmig angeordnet. Die beiden Heizleiter bzw. Heizleiterschichten bilden im Verbindungsabschnitt somit eine Stufe. Diese Ausführungsvariante mit stufenförmigem Aufbau bezieht sich insbesondere auf die Ausgestaltung mit in radialer Richtung der Rohrleitung übereinander angeordneten flächigen Heizleitern bzw. Heizleiterschichten. Zweckmäßigerweise ist ein Aggregat aus erstem Heizleiter bzw. erster Heizleiterschicht, daran anschließender Trennschicht sowie aus zweitem Heizleiter bzw. zweiter Heizleiterschicht stufenförmig ausgeführt. Es liegt im Rahmen der Erfindung, dass der erste flächige Heizleiter bzw. die erste Heizleiterschicht sowie der zweite flächige Heizleiter bzw. die zweite Heizleiterschicht und bevorzugt auch die Trennschicht die Außenoberfläche des Verbindungsabschnittes der Rohrleitung bilden.

Erfindungsgemäß wird beim Herstellen der Verbindung zwischen Verbinder und Rohrleitung ein Dorn des Verbinders in das Innere der Rohrleitung eingeschoben bzw. eingesteckt. Der Dorn greift an einem Ende der Rohrleitung in das Innere der Rohrleitung ein und bevorzugt in das Innere einer Innenschicht der Rohrleitung ein. Erfindungsgemäß wird beim Einschieben bzw. Einstecken des Dorns der Kontaktbereich/das Heizsegment bzw. werden die Kontaktbereiche/die Heizsegmente des Verbindungsabschnittes nach außen gedrückt bzw. nach außen gebogen. Auf diese Weise wird der elektrische Berührungskontakt des jeweiligen Heizsegmentes bzw. des jeweiligen Kontaktbereiches mit den elektrischen Kontaktstellen des Verbinders bzw. der Verbindungshülse ermöglicht bzw. erleichtert. Dadurch wird eine einfachere bzw. bessere elektrisch leitende Verbindung zwischen Kontaktbereichen und Kontaktstellen realisiert. Weiterhin ist die Erfindung dadurch gekennzeichnet, dass der Dorn an seiner Außenseite sägezahnförmige Profilierungen aufweist, wobei die Profilierungen das Drücken bzw. Biegen der Kontaktbereiche nach außen unterstützen.

Eine empfohlene Ausführungsform des erfindungsgemäßen Verbindungsaggregates ist dadurch gekennzeichnet, dass der Verbinder eine Ringnut aufweist, in welche Ringnut die Rohrleitung bzw. der Verbindungsabschnitt der Rohrleitung beim Herstellen der Verbindung zwischen Verbinder und Rohrleitung einschiebbar ist. Zweckmäßigerweise sind an der rohrleitungsseitigen bzw. verbindungsabschnittseitigen Innenoberfläche der Ringnut die elektrischen Kontaktstellen des Verbinders angeordnet. Vorzugsweise ist die Rohrleitung bzw. ist der Verbindungsabschnitt der Rohrleitung bis zu einem Anschlagende der Ringnut in die Ringnut einschiebbar. Bei diesem Einschieben der Rohrleitung bzw. des Verbindungsabschnittes in die Ringnut des Verbinders findet vorzugsweise ohne weiteres bzw. mehr oder weniger automatisch der Berührungskontakt zwischen den Kontaktbereichen des Verbindungsabschnittes und den Kontaktstellen des Verbinders statt. Wenn die Heizleiter bzw. Heizleiterschichten des Verbindungsabschnittes stufenförmig angeordnet sind, kann auch eine abgestufte bzw. stufenförmige Anordnung der Kontaktstellen des Verbinders vorgesehen sein. Gemäß einer Ausführungsvariante ist die Ringnut bzw. die die elektrischen Kontaktstellen aufweisende Innenoberfläche der Ringnut zumindest bereichsweise konisch ausgebildet. Auch auf diese Weise kann funktionssicher ein elektrischer Berührungskontakt zwischen den Kontaktbereichen und den Kontaktstellen erreicht werden. Grundsätzlich kann auch die Außenoberfläche des Verbindungsabschnittes mit den Kontaktbereichen konisch ausgebildet sein. Es liegt im Übrigen im Rahmen der Erfindung, dass die Ringnut des Verbinders den in die Rohrleitung bzw. den in den Verbindungsabschnitt einzuschiebenden Dorn umgibt bzw. den größten Teil der Länge des Dorns umgibt.

Nach einer sehr bevorzugten Ausführungsform der Erfindung ist zur Herstellung eines elektrischen Berührungskontaktes eine Verbindungshülse im Zuge der Verbindung von Rohrleitung und Verbinder auf den Verbindungsabschnitt der Rohrleitung aufschiebbar bzw. aufsteckbar. Empfohlenermaßen sind an der verbindungsabschnittseitigen Innenseite der Verbindungshülse die elektrischen Kontaktstellen angeordnet, die beim Aufschieben bzw. Aufstecken mit den elektrischen Kontaktbereichen des Verbindungsabschnittes in elektrischen Berührungskontakt kommen bzw. gebracht werden. Nach einer Ausführungsvariante der Erfindung ist die Verbindungshülse entlang der Rohrleitung auf den Verbindungsabschnitt der Rohrleitung aufschiebbar. Zweckmäßigerweise umgibt bzw. umfasst die Verbindungshülse die Rohrleitung bzw. den Verbindungsabschnitt zumindest teilweise und bevorzugt vollständig. Es hat sich bewährt, dass die aufgeschobene Verbindungshülse an einer Anschlagfläche des Verbinders anliegt bzw. formschlüssig anliegt.

Nach einer Ausführungsvariante ist die Verbindungshülse zylinderförmig bzw. im Wesentlichen zylinderförmig ausgebildet und bevorzugt ist der die Rohrleitung umgebende Aufnahmekanal der Verbindungshülse zylinderförmig bzw. im Wesentlichen zylinderförmig ausgebildet. Wenn die Heizsegmente der Heizleiter nach einer Ausführungsform stufenförmig ausgebildet sind, kann auch die Innenseite der Verbindungshülse stufenförmig oder konisch ausgeführt sein. - Es liegt im Rahmen der Erfindung, dass bei in die Rohrleitung eingeschobenem Dorn des Verbinders und bei auf den Verbindungsabschnitt aufgeschobener Verbindungshülse der Verbindungsabschnitt bzw. die Heizsegmente mit ihren Kontaktbereichen klemmend zwischen Verbindungshülse und Dorn aufgenommen wird/werden. Insoweit funktioniert die Verbindungshülse nach empfohlener Ausführungsform der Erfindung als Klemmhülse für den Verbindungsabschnitt bzw. für die elektrischen Kontaktbereiche des Verbindungsabschnittes. In dem auf den Verbindungsabschnitt aufgeschobenen Zustand der Verbindungshülse bzw. Klemmhülse kann die Form der Verbindungshülse aufgrund von Verformungen infolge der Klemmwirkung sich ändern bzw. von der Zylinderform abweichen. Das klemmende Aufschieben der Verbindungshülse gewährleistet einen funktionssicheren elektrischen Berührungskontakt zwischen den Kontaktbereichen des Verbindungsabschnittes und den Kontaktstellen der Verbindungshülse. - Nach einer Ausführungsform des erfindungsgemäßen Verbindungsaggregates sind die elektrischen Kontaktstellen der Verbindungshülse unmittelbar mit an der Verbindungshülse vorgesehenen elektrischen Außenanschlüssen verbunden, über die die elektrische Stromversorgung sichergestellt wird. Gemäß einer anderen nachfolgend erläuterten Ausführungsform sind die elektrischen Kontaktstellen der Verbindungshülse mit Heizleitern bzw. mit elektrischen Leitern des Verbinders verbunden. Nach einer Ausführungsvariante kann die elektrische Stromversorgung dann über diese Heizleiter bzw. elektrischen Leiter des Verbinders erfolgen. - Die Verbindungshülse kann in einer Ausgestaltung in Form einer zumindest bereichsweise elektrisch leitfähigen Klemme oder Klammer ausgebildet sein.

Nach einer bevorzugten Ausführungsform, der im Rahmen des erfindungsgemäßen Verbindungsaggregates besondere Bedeutung zukommt, ist die zumindest eine elektrische Kontaktstelle bzw. sind die elektrischen Kontaktstellen des Verbinders und/oder der Verbindungshülse mit zumindest einem entlang des Verbinders verlaufenden und den Verbinder beheizenden Verbinderheizleiter verbunden. Empfohlenermaßen sind mehrere elektrische Kontaktstellen des Verbinders und/oder der Verbindungshülse mit entlang des Verbinders verlaufenden und den Verbinder beheizenden Verbinderheizleitern verbunden. Soweit nachfolgend von mehreren Verbinderheizleitern die Rede ist, beziehen sich die erläuterten Ausführungsformen auch auf die Ausführungsform mit nur einem den Verbinder beheizenden Verbindungsheizleiter. - Zweckmäßigerweise erstrecken sich die Verbinderheizleiter über zumindest den Großteil der Länge des Verbinders und bevorzugt über die gesamte Länge des Verbinders bzw. im Wesentlichen über die gesamte Länge des Verbinders. Es liegt im Rahmen der Erfindung, dass die Verbinderheizleiter als flächige Verbinderheizleiter ausgebildet sind. Eine besonders bevorzugte Ausführungsform zeichnet sich dadurch aus, dass die in dem Verbinder angeordneten und zur Beheizung des Verbinders vorgesehenen Verbinderheizleiter als Verbinderheizleiterschichten ausgebildet sind. Die Verbinderheizleiterschichten laufen empfohlenermaßen zumindest über einen Teil des Verbinderumfangs um und nach einer Ausführungsvariante über den gesamten Verbinderumfang um. Gemäß einer Ausführungsform bestehen die Verbinderheizleiterschichten aus Metall bzw. im Wesentlichen aus Metall und besonders bevorzugt sind die Verbinderheizleiterschichten als Metallfolie bzw. als Metallfilm ausgebildet. Nach einer anderen Ausführungsvariante der Erfindung bestehen die Verbinderheizleiterschichten aus einem leitfähigen Polymer bzw. leitfähigen Kunststoff oder im Wesentlichen aus einem leitfähigen Polymer bzw. leitfähigen Kunststoff. Dem Polymer/Kunststoff sind dabei zweckmäßigerweise Leitfähigkeitszusätze zugegeben. Es liegt im Rahmen der Erfindung, dass die Verbinderheizleiterschichten bezüglich der Materialwahl entsprechend den Heizleiterschichten der Kraftfahrzeugrohrleitung eingerichtet sind.

Eine empfohlene Ausführungsform der Erfindung ist dadurch gekennzeichnet, dass die Verbinderheizleiter bzw. die Verbinderheizleiterschichten durch Aufdrucken mittels eines Druckverfahrens auf den Verbinder aufgebracht sind. Auch bezüglich des Verbinders kann auf die zu der Rohrleitung im Zusammenhang mit dem Aufdrucken beschriebenen Ausführungsformen verwiesen werden. Die Verbinderheizleiter bzw. die Verbinderheizleiterschichten können mittels eines Druckverfahrens relativ einfach und wenig aufwendig aufgebracht werden. Auch hier können die Verbinderheizleiter bzw. Verbinderheizleiterschichten gleichsam in einer Umfangsebene des Verbinders und somit nebeneinander angeordnet werden. Das hat auch den Vorteil, dass Trennschichten bzw. Deckschichten auf dem Verbinderheizleiter bzw. auf den Verbinderheizleiterschichten grundsätzlich nicht erforderlich sind.

Es liegt weiterhin im Rahmen der Erfindung, dass beim Herstellen der Verbindung zwischen Rohrleitung und Verbinder der elektrische Berührungskontakt zwischen den Kontaktbereichen der Rohrleitung und den Kontaktstellen des Verbinders/der Verbindungshülse lediglich durch Zusammenschieben bzw. Zusammenstecken von Rohrleitung und Verbinder und gegebenenfalls Verbindungshülse realisiert wird. Dabei liegt es insbesondere im Rahmen der Erfindung, dass der elektrische Berührungskontakt bzw. die elektrische Verbindung lötverbindungsfrei und/oder crimpverbindungsfrei und/oder klebverbindungsfrei und/oder schraubverbindungsfrei verwirklicht ist. Bevorzugt findet der elektrische Berührungskontakt also lediglich durch Zusammenschieben/Zusammenstecken der Komponenten und besonders bevorzugt mit Hilfe einer Klemmverbindung statt. Eine solche Klemmverbindung wird - wie oben bereits erläutert - insbesondere mittels der an der Außenseite des Dorns vorhandenen Profilierungen erreicht, wenn diese Profilierungen die Kontaktbereiche in Richtung der Kontaktstellen des Verbinders bzw. der Verbindungshülse drücken. Die Klemmwirkung bzw. Klemmverbindung kann nach einer Ausführungsform der Erfindung in der Ringnut des Verbinders realisiert werden. Nach einer anderen Ausführungsform wird - wie oben dargelegt - die Klemmwirkung bzw. Klemmverbindung mit der auf den Verbindungsabschnitt aufgeschobenen bzw. aufgesteckten Verbindungshülse verwirklicht.

Der Erfindung liegt die Erkenntnis zugrunde, dass mit dem erfindungsgemäßen Verbindungsaggregat eine optimale Temperierung bzw. Beheizung sowohl der Kraftfahrzeugrohrleitung als auch eines an die Kraftfahrzeugrohrleitung angeschlossenen Verbinders realisiert werden kann. Der Erfindung liegt weiterhin die Erkenntnis zugrunde, dass dies insbesondere erreicht werden kann, wenn sowohl die Kraftfahrzeugrohrleitung als auch der Verbinder mit flächigen Heizleitern/Verbinderheizleitern bzw. mit Heizleiterschichten/Verbinderheizleiterschichten ausgestattet sind. Im Rahmen der Erfindung wird auf besonders einfache Weise eine elektrische Verbindung zwischen den Heizleitern der Kraftfahrzeugrohrleitung und den Verbinderheizleitern verwirklicht. Ein effektiver elektrischer Berührungskontakt wird dabei vor allem mit Hilfe der erfindungsgemäß bevorzugten Klemmverbindung in der Ringnut des Verbinders bzw. mittels der Verbindungshülse erzielt. Diese Verbindung ist sehr funktionssicher und kann ohne aufwendige Maßnahmen und insbesondere ohne spezielle bzw. aufwendige Verbindungsmaßnahmen erreicht werden. Zu betonen ist weiterhin, dass die elektrische Verbindung im Wesentlichen störanfälligkeitsfrei und resistent gegen mechanische Beeinträchtigungen ist. Hervorzuheben ist weiterhin, dass das erfindungsgemäße Verbindungsaggregat mit sehr einfachen und kostengünstigen Komponenten realisiert werden kann. Die Erfindung zeichnet sich zusammenfassend also vor allem durch geringen Aufwand und geringe Kosten aus.

Nachfolgend wird die Erfindung anhand einer lediglich ein Ausführungsbeispiel darstellenden Zeichnung näher erläutert. Es zeigen in schematischer Darstellung:
- Fig. 1: Einen Schnitt durch eine Kraftfahrzeugrohrleitung eines erfindungsgemäßen Verbindungsaggregates,
- Fig. 2: eine Seitenansicht des Gegenstandes gemäß Fig. 1,
- Fig. 3: eine Seitenansicht eines Verbindungsaggregates aus Verbinder und Rohrleitung,
- Fig. 4: ein erfindungsgemäßes Verbindungsaggregat aus Verbinder, Rohrleitung und Verbindungshülse in einer ersten Funktionsstellung,
- Fig. 5: den Gegenstand nach Fig. 4 in einer zweiten Funktionsstellung,
- Fig. 6: den Gegenstand gemäß Fig. 4 in einer dritten Funktionsstellung,
- Fig. 7: den Gegenstand nach Fig. 6 in einer anderen Ausführungsform,
- Fig. 8: den Gegenstand gemäß Fig. 6 in einer weiteren Ausführungsform,
- Fig. 9: einen Schnitt durch eine Kraftfahrzeugrohrleitung des erfindungsgemäßen Verbindungsaggregates in einer anderen Ausführungsform,
- Fig. 10: eine Seitenansicht des Gegenstandes gemäß Fig. 9,
- Fig. 11: einen Schnitt durch eine weitere Ausführungsform einer Verbindungshülse,
- Fig. 12: den Gegenstand nach Fig. 11 in einer Seitenansicht,
- Fig. 13: ein erfindungsgemäßes Verbindungsaggregat aus Verbinder, Rohrleitung und Verbindungshülse (Rohrleitung gemäß Fig. 9, 10 und Verbindungshülse gemäß Fig. 11, 12) und
- Fig. 14: einen Schnitt durch den Gegenstand nach Fig. 13.

Die Figuren zeigen ein Verbindungsaggregat 1 aus einer beheizbaren Kraftfahrzeugrohrleitung 2 für die Durchleitung eines fluiden Mediums und einem beheizbaren Verbinder 3 für die Verbindung mit der Kraftfahrzeugrohrleitung 2. Der Verbinder mag bevorzugt und im Ausführungsbeispiel als Schnellverbinder (Quick Connector) ausgebildet sein. Empfohlenermaßen wird eine wässrige Harnstofflösung für ein Katalysatorsystem eines Kraftfahrzeuges als fluides Medium durch die Rohrleitung 2 und durch den Verbinder 3 geleitet.

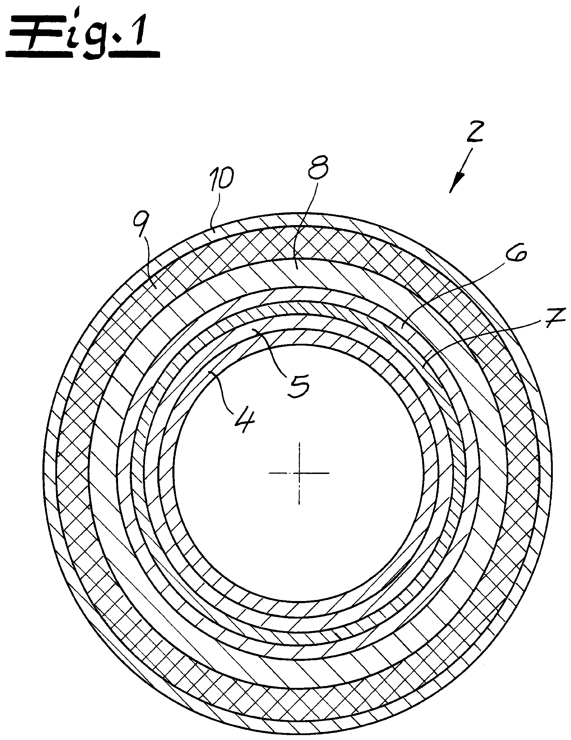

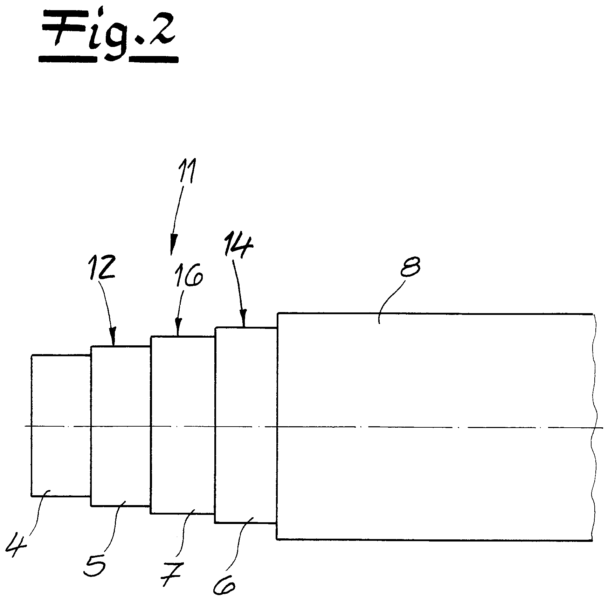

Insbesondere in der Fig. 1 ist erkennbar, dass die Rohrleitung eine Innenschicht 4 aufweist, die an ihrer Innenoberfläche in Kontakt mit dem durch die Rohrleitung 2 geleiteten (in den Figuren nicht dargestellten) fluiden Medium steht. Außerdem weist die Rohrleitung 2 im Ausführungsbeispiel nach den Fig. 1 bis 8 eine an die Innenschicht angrenzende innere erste Heizleiterschicht 5 auf sowie eine zweite äußere Heizleiterschicht 6 auf. Vorzugsweise handelt es sich bei den beiden Heizleiterschichten 5, 6 um die Hin- und Rückleitung für den Heizstrom und insoweit sind beide Schichten bevorzugt in Reihe geschaltet. Beide Heizleiterschichten 5, 6 laufen zweckmäßigerweise und im Ausführungsbeispiel über den Umfang der Rohrleitung 2 um. Es mag sich dabei um Heizleiterschichten 5, 6 aus leitfähigem Kunststoff handeln. Die beiden Heizleiterschichten 5, 6 sind durch eine elektrisch isolierende Trennschicht 7 voneinander getrennt. Fernerhin schließt bevorzugt und im Ausführungsbeispiel nach den Fig. 1 bis 8 an die zweite äußere Heizleiterschicht 6 eine Außenschicht 8 der Rohrleitung 2 an. Diese Außenschicht 8 dient insbesondere dem äußeren Schutz der Heizleiterschichten 5, 6 vor beispielsweise mechanischen Beanspruchungen. An die Außenschicht 8 schließt bevorzugt und im Ausführungsbeispiel eine thermische Isolierungsschicht 9 an. Schließlich ist außen an der thermischen Isolierungsschicht 9 noch eine äußere Schutzschicht 10 angeordnet, die die Rohrleitung 2 vor äußeren mechanischen Einflüssen sowie korrosiven Einflüssen schützt. Der besseren Übersichtlichkeit halber wurden die thermische Isolierungsschicht 9 und die äußere Schutzschicht 10 in den Figuren 2 bis 8 nicht dargestellt.

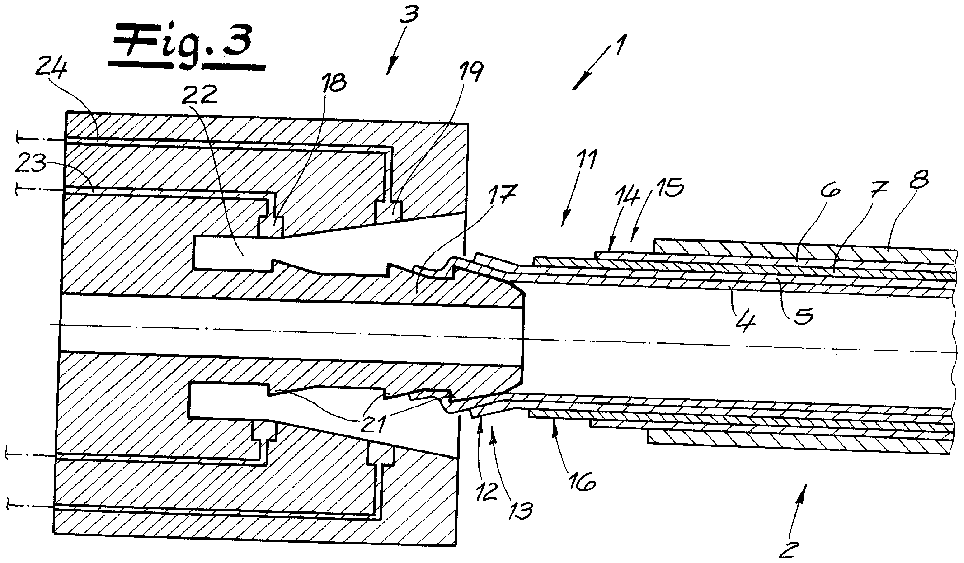

In den Figuren 3 bis 8 ist angedeutet, dass sich die beiden Heizleiterschichten 5, 6 der Rohrleitung 2 über die Länge der Rohrleitung 2 erstrecken. Sie reichen bis in den Verbindungsabschnitt 11 der Rohrleitung 2. Im Verbindungsabschnitt 11 weist die erste innere Heizleiterschicht 5 ein erstes nach außen hin offenes bzw. unbedecktes Heizsegment 12 auf, das einen ersten elektrischen Kontaktbereich 13 des Verbindungsabschnittes 11 bzw. der Rohrleitung 2 bereitstellt. Im Verbindungsabschnitt 11 weist weiterhin bevorzugt und im Ausführungsbeispiel die zweite Heizleiterschicht 6 ein zweites nach außen hin offenes unbedecktes Heizsegment 14 auf, das einen zweiten elektrischen Kontaktbereich 15 für die zweite Heizleiterschicht 6 bereitstellt. In den Figuren 2 bis 8 ist erkennbar, dass die Enden der beiden Heizleiterschichten 5, 6 bzw. die beiden Heizsegmente 12 und 14 im Verbindungsabschnitt 11 stufenartig bzw. stufenförmig ausgebildet ist. Das gilt auch für die zwischengeschaltete isolierende Trennschicht 7, die mit einem entsprechenden Stufenabschnitt 16 in den Verbindungsabschnitt 11 der Rohrleitung 2 hineinragt.

Erfindungsgemäß kommen beim Verbinden von Rohrleitung 2 und Verbinder 3 bzw. beim Zusammenschieben/Zusammenstecken von Rohrleitung 2 und Verbinder 3 die beiden elektrischen Kontaktbereiche 13, 15 der Rohrleitung 2 unmittelbar in elektrisch leitenden Berührungskontakt mit elektrischen Kontaktstellen bzw. mit zwei elektrischen Kontaktstellen 18 und 19 des Verbinders 3 oder einer Verbindungshülse 20. Bevorzugt und im Ausführungsbeispiel nach den Figuren erfolgt der elektrische Berührungskontakt zwischen den beiden Kontaktbereichen 13 und 15 der Rohrleitung 2 bzw. des Verbindungsabschnittes 11 und der beiden Kontaktstellen 18, 19 des Verbinders 3 bzw. der Verbindungshülse 20 allein durch Zusammenschieben bzw. Zusammenstecken der Komponenten. Eine Lötverbindung oder Crimpverbindung oder dergleichen zwischen den Kontaktbereichen 13, 15 und den elektrischen Kontaktstellen 18, 19 ist dabei grundsätzlich nicht notwendig.

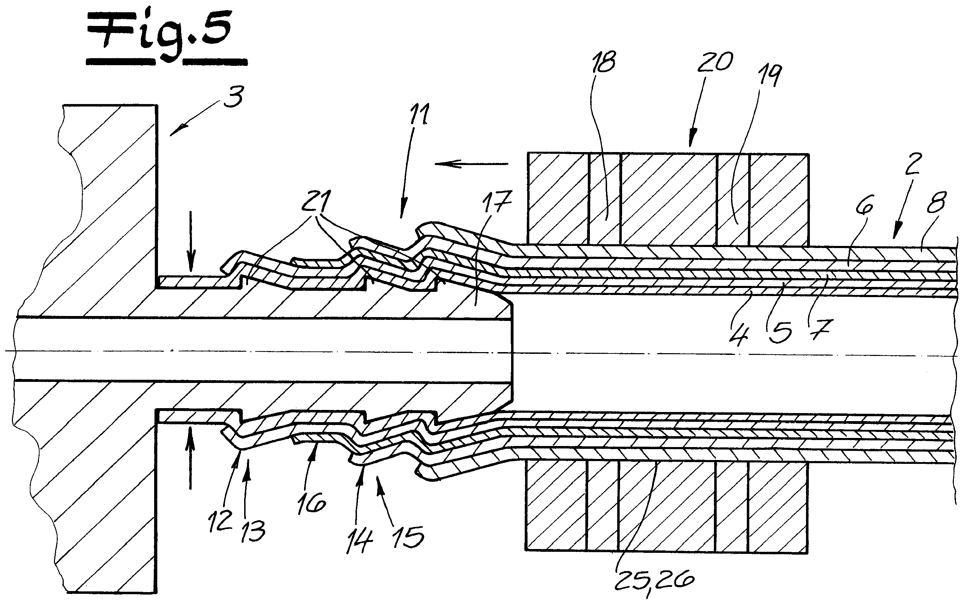

In den Figuren 2 bis 8 ist erkennbar, dass nach bevorzugter Ausführungsform und im Ausführungsbeispiel beim Herstellen der Verbindung zwischen Verbinder 3 und Rohrleitung 2 ein Dorn 17 des Verbinders 3 in das Innere der Rohrleitung 2 einschiebbar bzw. einsteckbar ist. Zweckmäßigerweise und im Ausführungsbeispiel weist der Dorn 17 an seiner Außenseite Profilierungen - bevorzugt und im Ausführungsbeispiel sägezahnförmige Profilierungen 21 - auf. Beim Einschieben/Einstecken des Dorns 17 wird insbesondere unter Einwirkung der sägezahnförmigen Profilierungen 21 der erste Kontaktbereich 13 sowie der zweite Kontaktbereich 15 nach außen gedrückt bzw. gebogen, so dass der elektrische Berührungskontakt zwischen den Kontaktbereichen 13, 15 und den elektrischen Kontaktstellen 18, 19 des Verbinders 3 bzw. der Verbindungshülse 20 ermöglicht bzw. erleichtert wird. In der Figur 5 ist durch Pfeile am Verbindungsabschnitt 11 im Übrigen angedeutet worden, dass der Verbindungsabschnitt 11 und der Dorn 17 miteinander verschweißt werden können, vorzugsweise mittels Laserschweißen.

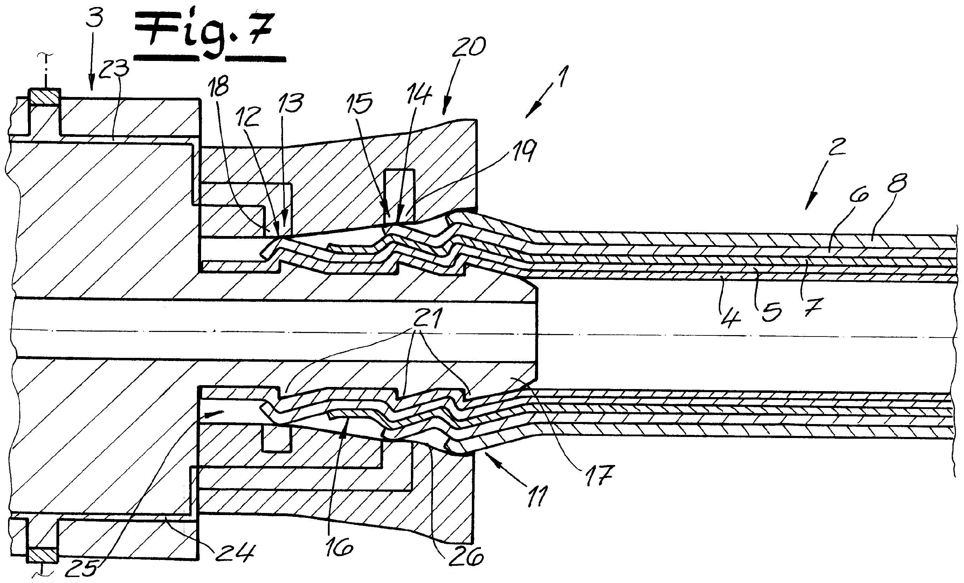

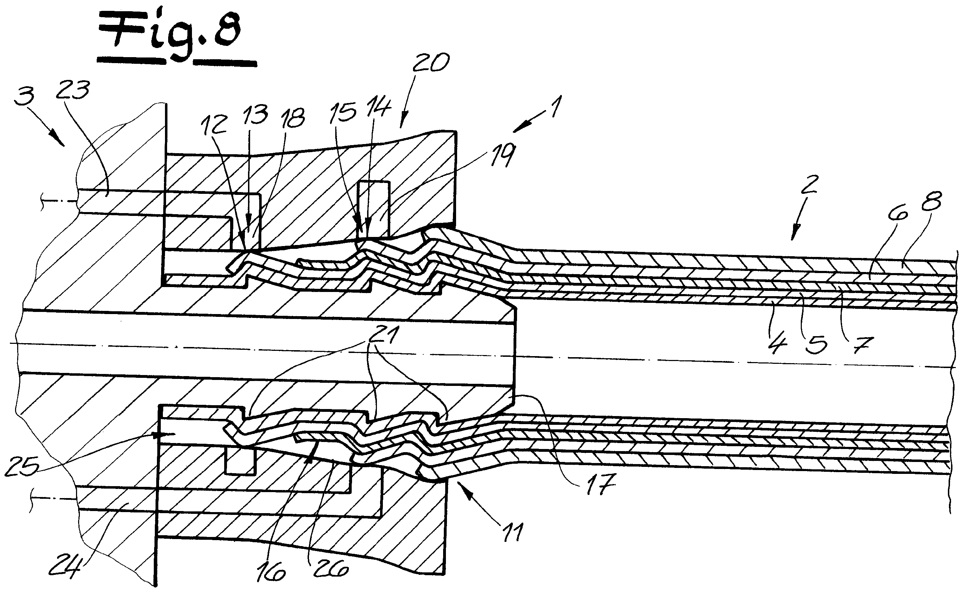

Im Ausführungsbeispiel nach Figur 3 ist erkennbar, dass bevorzugt und im Ausführungsbeispiel der Verbinder 3 eine zylinderförmige Ringnut 22 aufweist, in welche Ringnut 22 der Verbindungsabschnitt 11 der Rohrleitung 2 beim Herstellen der Verbindung zwischen Verbinder 3 und Rohrleitung 2 eingeschoben wird. Zweckmäßigerweise und im Ausführungsbeispiel nach Figur 3 sind an der rohrleitungsseitigen bzw. verbindungsabschnittseitigen Innenoberfläche der Ringnut 22 die elektrischen Kontaktstellen 18, 19 des Verbinders angeordnet. Beim Einschieben der Rohrleitung 2 bzw. des Verbindungsabschnittes 11 in die Ringnut 22 findet ein elektrischer Berührungskontakt zwischen den Kontaktbereichen 13, 15 des Verbindungsabschnittes 11 und den Kontaktstellen 18, 19 des Verbinders 3 statt. Die elektrischen Kontaktstellen 18, 19 des Verbinders 3 sind mit Verbinderheizleitern verbunden, die als Verbinderheizleiterschichten 23, 24 ausgebildet sein können. Solche Verbinderheizleiterschichten 23, 24, die bevorzugt über den gesamten Umfang des Verbinders 3, umlaufen, sind in den Figuren 7 und 8 angedeutet worden. In der Figur 3 ist im Übrigen eine stufenförmige Anordnung der beiden Heizsegmente 12, 14 bzw. der beiden Kontaktbereiche 13, 15 des Verbindungsabschnittes 11 verwirklicht. Im Ausführungsbeispiel nach Figur 3 ist die Innenoberfläche der Ringnut 22 in ihrem vorderen Bereich konisch ausgebildet, damit ein effektiver elektrischer Berührungskontakt zwischen den Kontaktbereichen 13, 15 und den Kontaktstellen 18, 19 stattfinden kann. Diese Innenoberfläche der Ringnut 22 könnte auch - entsprechend der Ausbildung des Verbindungsabschnittes 11 - stufenförmig ausgeführt sein. Prinzipiell könnte die Innenoberfläche der Ringnut auch lediglich zylinderförmig ausgebildet sein. Zweckmäßigerweise wird der Verbindungsabschnitt 11 mit seinen Kontaktbereichen 13, 15 zwischen dem Dorn 17 und der Innenoberfläche der Ringnut 22 gleichsam eingeklemmt, so dass aufgrund der Klemmwirkung ein funktionssicherer elektrischer Berührungskontakt zwischen den Kontaktbereichen 13, 15 und den Kontaktstellen 18, 19 resultiert.

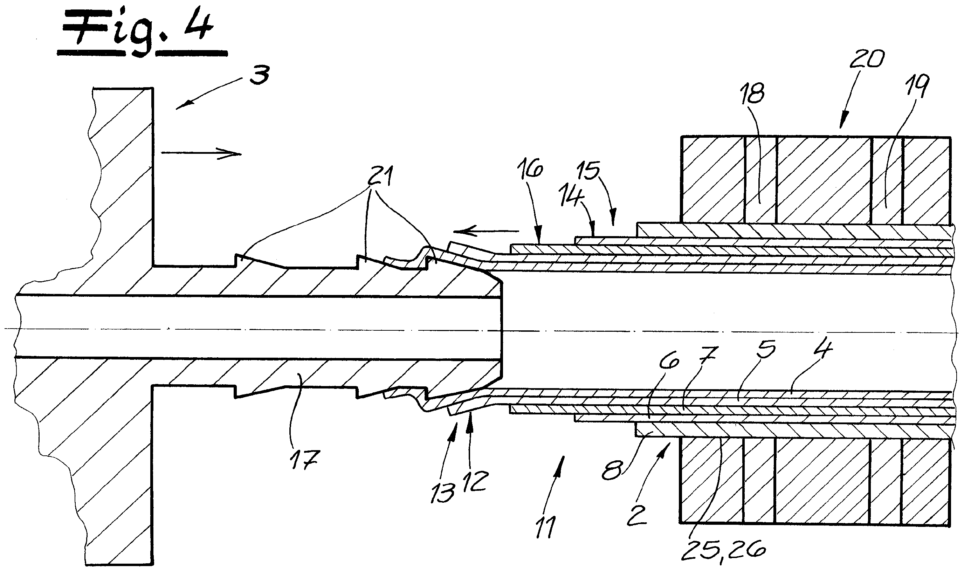

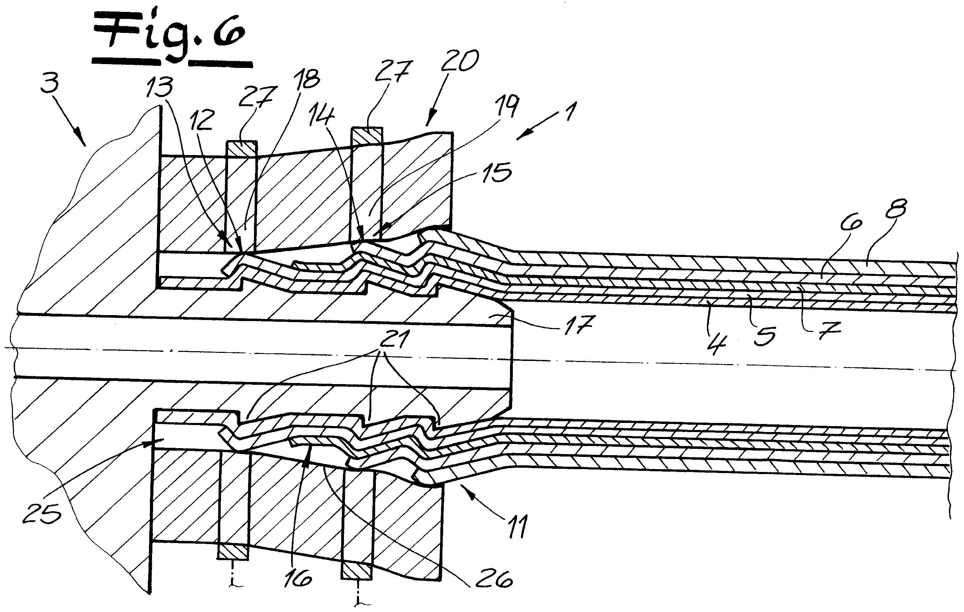

Die Ausführungsformen nach den Figuren 4 bis 8 zeigen eine Verbindung eines Verbinders 3 mit einer Kraftfahrzeugrohrleitung 2 unter Einbeziehung einer Verbindungshülse 20. Zur Herstellung des elektrischen Berührungskontaktes wird hier eine zylinderförmige Verbindungshülse 20 auf den Verbindungsabschnitt 11 der Rohrleitung 2 aufgeschoben. Die Verbindungshülse 20 umgibt dabei die Rohrleitung 2 und weist einen entsprechenden Aufnahmekanal 25 für die Rohrleitung 2 auf. An der verbindungsabschnittsseitigen Innenseite 26 der Verbindungshülse 20 sind bevorzugt und im Ausführungsbeispiel die beiden elektrischen Kontaktstellen 18, 19 angeordnet, die beim Aufschieben bzw. Aufstecken der Verbindungshülse 20 auf den Verbindungsabschnitt mit den elektrischen Kontaktbereichen 13, 15 des Verbindungsabschnittes 11 bzw. der Rohrleitung 2 in elektrischen Berührungskontakt gebracht werden. Vorher wird zweckmäßigerweise der Dorn 17 des Verbinders 3 in das Innere der Rohrleitung 2 bzw. des Verbindungsabschnittes 11 eingeschoben (siehe insbesondere Figur 5). Wie oben bereits dargelegt wird mit den sägezahnartigen Profilierungen 21 des Dorns 17 ein Herausdrücken bzw. Herausbiegen der elektrischen Kontaktbereiche 13, 15 nach außen bzw. in Richtung der Kontaktstellen 18, 19 der Verbindungshülse 20 erzielt. Bei den Ausführungsbeispielen mit der Verbindungshülse 20 wird der Verbindungsabschnitt 11 mit seinen Kontaktbereichen 13, 15 zwischen dem Dorn 17 und der Verbindungshülse 20 gleichsam eingeklemmt. Durch diese Klemmwirkung wird ein effektiver elektrischer Berührungskontakt zwischen den Kontaktbereichen 13, 15 des Verbindungsabschnittes 11 einerseits und den Kontaktstellen 18, 19 der Verbindungshülse 20 andererseits sichergestellt. Beim Aufschieben auf den Verbindungsabschnitt 11 kann die Verbindungshülse zur Erzielung einer besonders wirksamen Klemmwirkung verformt werden. Das ist in den Figuren 6 bis 8 übertrieben gezeichnet worden.

Im Ausführungsbeispiel nach Figur 6 sind die elektrischen Kontaktstellen 18, 19 der Verbindungshülse 20 mit elektrischen Außenanschlüssen 27 der Verbindungshülse 20 verbunden. Die elektrischen Außenanschlüsse 27 sind dabei an der dem Verbindungsabschnitt 11 abgewandten Außenseite der Verbindungshülse 20 angeordnet. Im Ausführungsbeispiel nach den Figuren 7 und 8 sind die elektrischen Kontaktstellen 18, 19 der Verbindungshülse 20 mit den durch den Verbinder 3 verlaufenden und den Verbinder beheizenden Verbinderheizleiterschichten 23, 24 verbunden. Die Verbinderheizleiterschichten 23, 24 erstrecken sich bevorzugt zumindest über den Großteil der Länge des Verbinders 3 und laufen empfohlenermaßen über den Umfang des Verbinders 3 um. Die Verbinderheizleiterschichten 23, 24 mögen im Ausführungsbeispiel wie die Heizleiterschichten 5, 6 der Rohrleitung aus einem leitfähigen Kunststoff bestehen. Sie könnten auch aus einer Metallfolie oder dergleichen elektrisch leitfähigen Material bestehen.

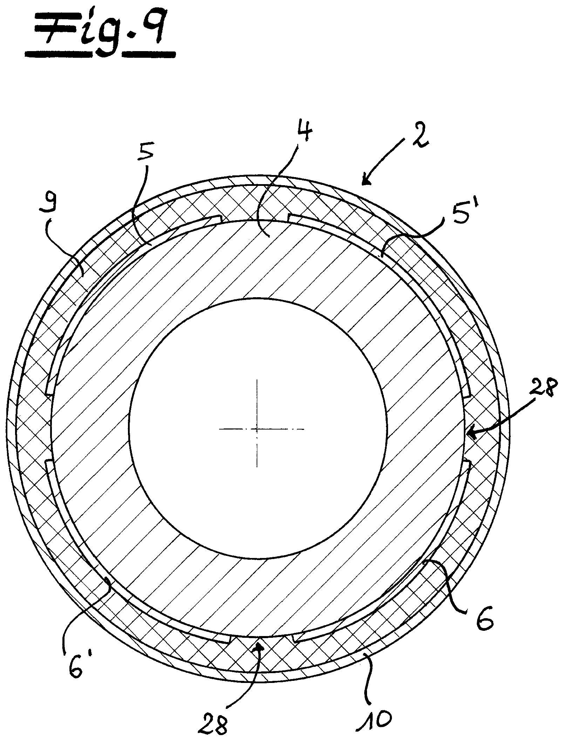

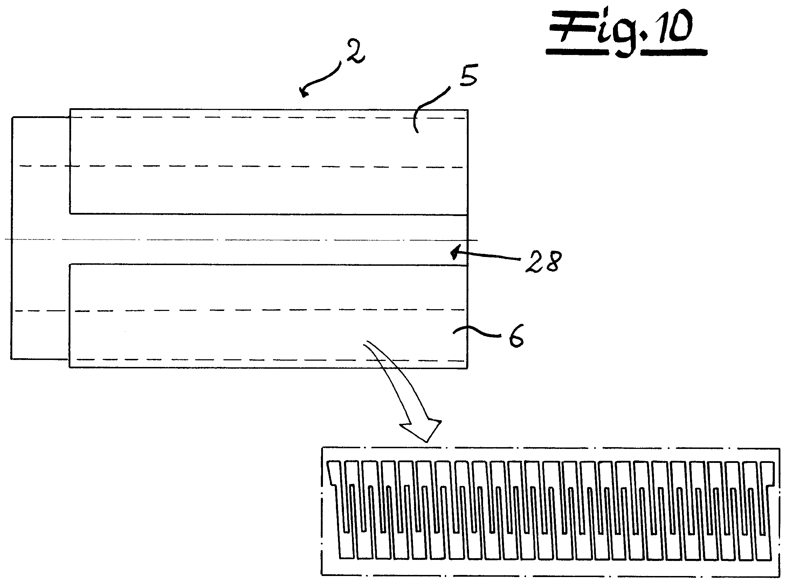

Die Fig. 9 zeigt eine andere Ausführungsform einer erfindungsgemäßen Rohrleitung 2. Hier sind vier Heizleiterschichten 5, 5', 6, 6' auf die Rohrleitung 2 bzw. auf eine Innenschicht 4 der Rohrleitung aufgebracht. Diese Heizleiterschichten 5, 5', 6, 6' wurden mittels eines Druckverfahrens auf die Rohrleitung 2 bzw. auf die Innenschicht 4 aufgedruckt. Wie die Fig. 10 zeigt, erstrecken sich die Heizleiterschichten 5, 5', 6, 6' über die Länge der Rohrleitung 2. Die vier Heizleiterschichten 5, 5', 6, 6' sind gleichsam auf einer Umfangsebene der Rohrleitung 2 über den Umfang der Rohrleitung 2 nebeneinander angeordnet (Fig. 9). Eine Außenschicht 8 ist bei dieser Ausführungsform für die Rohrleitung 2 grundsätzlich nicht erforderlich. Die Fig. 9 zeigt jedoch eine auf den Heizleiterschichten 5, 5', 6, 6' angeordnete thermische Isolierungsschicht 9. Über der thermischen Isolierungsschicht 9 ist eine äußere Schutzschicht 10 aufgebracht.

Die Fig. 9 und 10 zeigen, dass zwischen den über die Länge der Rohrleitung 2 verlaufenden Heizleiterschichten 5, 5', 6, 6' Zwischenräume 28 vorgesehen sind, die diese Heizleiterschichten 5, 5', 6, 6' voneinander trennen bzw. isolierend voneinander trennen. In dem vergrößerten Ausschnitt der Fig. 10 ist gezeigt, dass eine Heizleiterschicht 5, 5', 6, 6' über die Länge der Rohrleitung 2 nicht durchgehend ausgebildet sein muss. Hier ist nach einer bevorzugten Ausführungsform ein mäanderförmiger Verlauf von Heizleiterschichtabschnitten dargestellt.

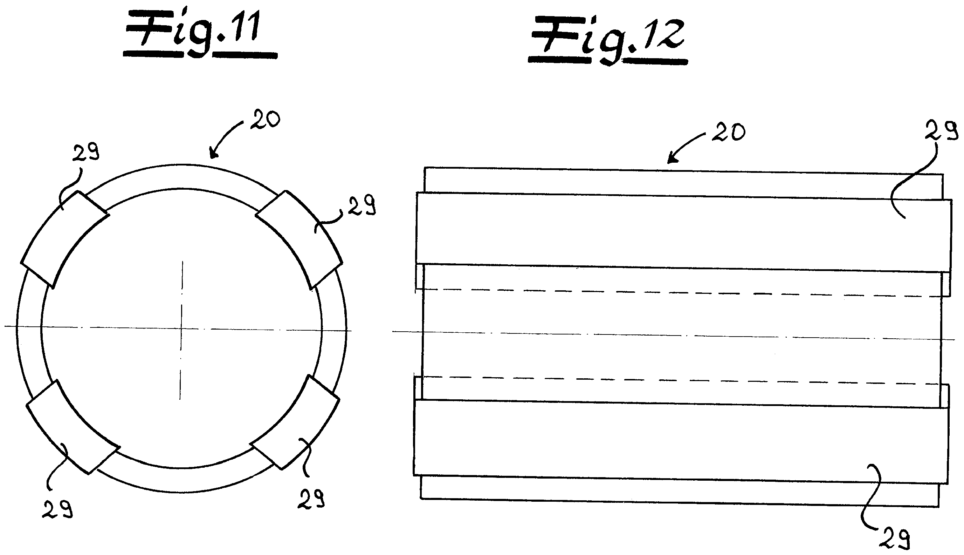

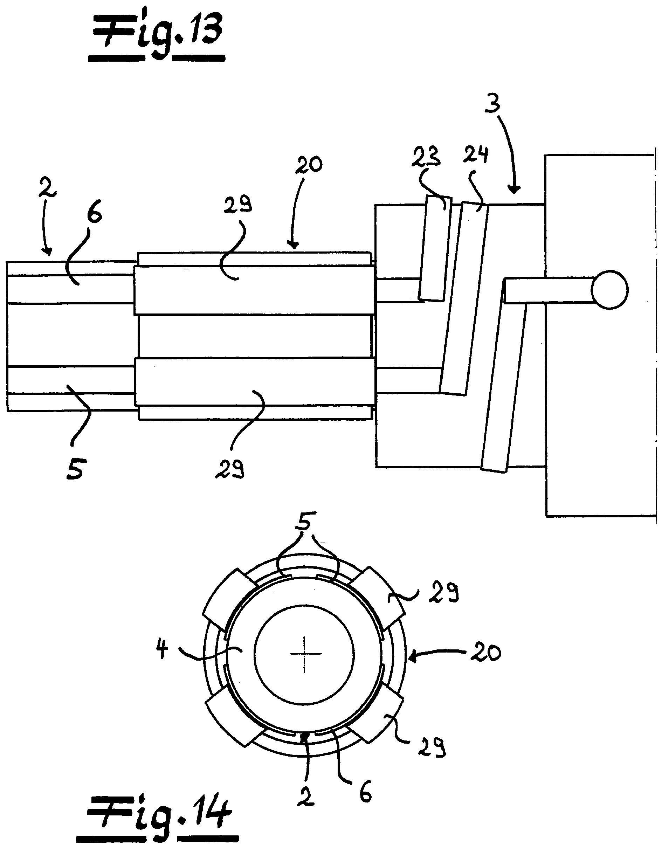

Die Fig. 11 und 12 zeigen eine Verbindungshülse 20 für den Anschluss einer Rohrleitung 2 gemäß den Fig. 9 und 10 an einen Verbinder 3 (verbundener Zustand in Fig. 13). Die Verbindungshülse weist vier Hülsenheizleiterschichten 29 für den elektrischen Kontakt mit den Heizleiterschichten 5, 5', 6, 6' der Rohrleitung 2 auf. Auch die Hülsenheizleiterschichten 29 können grundsätzlich mittels eines Druckverfahrens auf die Verbindungshülse 20 aufgedruckt werden. Fernerhin weist im Ausführungsbeispiel nach Fig. 13 der Verbinder 3 Verbinderheizleiterschichten 23, 24 auf, die auf den Verbinder 3 mittels eines Druckverfahrens aufgedruckt sind. Diese Verbinderheizleiterschichten 23, 24 werden in Kontakt mit den Hülsenheizleiterschichten 29 der Verbindungshülse 20 gebracht (Fig. 13).

Da gemäß bevorzugter Ausgestaltung bei dieser Ausführungsform keine Außenschicht 8 auf den Heizleiterschichten 5, 5', 6, 6' vorhanden ist (siehe insbesondere Fig. 10) ist zur Herstellung der elektrischen Verbindung zwischen der Rohrleitung 2 und dem Verbinder 3 bzw. der Verbindungshülse 20 ein Abtragen einer Außenschicht 8 nicht erforderlich. Vielmehr stellen die Heizleiterschichten 5, 5', 6, 6' in einer Umfangsebene nebeneinander liegende Heizsegmente 12, 12', 14, 14' für die elektrische Verbindung zur Verfügung. Das macht die elektrische Verbindung zwischen Rohrleitung 2 einerseits und Verbinder 3 bzw. Verbindungshülse 20 andererseits sehr einfach und wenig aufwendig.

Erfindungsgemäß wird beim Herstellen der Verbindung zwischen Rohrleitung 2 und Verbinder 3 der elektrische Berührungskontakt zwischen den Kontaktbereichen 13, 15 der Rohrleitung 2 und den Kontaktstellen 18, 19 des Verbinders 3 bzw. der Verbindungshülse 20 lediglich durch Zusammenschieben bzw. Zusammenstecken von Rohrleitung 2 und Verbinder 3 bzw. von Verbindungshülse 20 realisiert. Die elektrische Verbindung zwischen Kontaktbereichen 13, 15 und Kontaktstellen 18, 19 wird bevorzugt lötverbindungsfrei und/oder crimpverbindungsfrei und/oder schraubverbindungsfrei und/oder klebverbindungsfrei ausgebildet. Spezielle und aufwendige Verbindungsmaßnahmen der elektrischen Kontakte sind grundsätzlich im Rahmen der Erfindung nicht erforderlich.

## Patentansprüche

1. Verbindungsaggregat (1) aus einer beheizbaren Kraftfahrzeugrohrleitung (2) für die Durchleitung eines fluiden Mediums und einem beheizbaren Verbinder (3) für die Verbindung mit der Kraftfahrzeugrohrleitung (2), wobei die Rohrleitung (2) zumindest einen flächigen Heizleiter aufweist, wobei sich der zumindest eine Heizleiter über die Länge der Rohrleitung (2) erstreckt bzw. sich im Wesentlichen über die Länge der Rohrleitung (2) erstreckt und sich bis in einen Verbindungsabschnitt (11) der Rohrleitung (2) für die Verbindung mit dem Verbinder (3) erstreckt,
wobei der zumindest eine flächige Heizleiter am Verbindungsabschnitt (11) der Rohrleitung (2) einen elektrischen Kontaktbereich (13, 15) aufweist und wobei beim Verbinden der Rohrleitung (2) mit dem Verbinder (3) bzw. beim Zusammenschieben und/oder Zusammenstecken von Rohrleitung (2) und Verbinder (3) der elektrische Kontaktbereich (13, 15) der Rohrleitung (2) in elektrisch leitenden Berührungskontakt mit einer elektrischen Kontaktstelle (18, 19) des Verbinders (3) oder einer im Zuge des Verbindens von Rohrleitung (2) und Verbinder (3) an bzw. auf dem Verbindungsabschnitt (11) aufgebrachten Verbindungshülse (20) kommt,
wobei beim Herstellen der Verbindung zwischen Verbinder (3) und Rohrleitung (2) ein Dorn (17) des Verbinders (3) in das Innere der Rohrleitung (2) einschiebbar bzw. einsteckbar ist,
wobei beim Einschieben bzw. beim Einstecken des Dorns (17) der Kontaktbereich (13, 15) nach außen gedrückt bzw. gebogen wird, so dass der elektrische Berührungskontakt des Kontaktbereiches mit den elektrischen Kontaktstellen des Verbinders bzw. der Verbindungshülse ermöglicht bzw. erleichtert wird
und wobei der Dorn (17) an seiner Außenseite sägezahnförmige Profilierungen (21) aufweist, wobei die sägezahnartigen Profilierungen (21) das Drücken bzw. Schieben des ersten und/oder des zweiten Kontaktbereiches (13, 15) nach außen unterstützen bzw. vereinfachen.

2. Verbindungsaggregat nach Anspruch 1, wobei die Rohrleitung (2) eine Innenschicht (4) aufweist, die in Kontakt mit dem durch die Rohrleitung (2) geleiteten fluiden Medium steht, wobei die Rohrleitung (2) bevorzugt zumindest eine Außenschicht (8) aufweist und wobei der zumindest eine flächige Heizleiter zwischen der Innenschicht (4) und der Außenschicht (8) angeordnet ist.

3. Verbindungsaggregat nach einem der Ansprüche 1 oder 2, wobei der zumindest eine flächige Heizleiter als Heizleiterschicht (5, 6) der Rohrleitung (2) ausgebildet ist, wobei die Heizleiterschicht (5, 6) über zumindest einen Teil des Umfangs der Rohrleitung (2) umläuft und nach einer Ausführungsform über den gesamten Umfang der Rohrleitung (2) umläuft.

4. Verbindungsaggregat nach einem der Ansprüche 1 bis 3, wobei die Rohrleitung (2) zumindest einen ersten flächigen Heizleiter und zumindest einen zweiten flächigen Heizleiter aufweist, wobei sich die beiden Heizleiter über die Länge der Rohrleitung (2) erstrecken bzw. sich im Wesentlichen über die Länge der Rohrleitung (2) erstrecken und sich bis in einen Verbindungsabschnitt (11) der Rohrleitung (2) für die Verbindung mit dem Verbinder (3) erstrecken, wobei die beiden Heizleiter am Verbindungsabschnitt (11) der Rohrleitung (2) jeweils einen elektrischen Kontaktbereich (13, 15) aufweisen und wobei beim Verbinden der Rohrleitung (2) mit dem Verbinder (3) bzw. beim Zusammenschieben und/oder Zusammenstecken von Rohrleitung (2) und Verbinder (3) die beiden elektrischen Kontaktbereiche (13, 15) der Rohrleitung (2) in elektrisch leitenden Berührungskontakt mit zumindest zwei elektrischen Kontaktstellen (18, 19) des Verbinders (3) oder eine im Zuge des Verbindens von Rohrleitung (2) und Verbinder (3) an bzw. auf dem Verbindungsabschnitt (11) aufgebrachten Verbindungshülse (20) kommen.

5. Verbindungsaggregat nach Anspruch 4, wobei zwischen dem ersten flächigen Heizleiter bzw. zwischen der ersten Heizleiterschicht (5) und dem zweiten flächigen Heizleiter bzw. der zweiten Heizleiterschicht (6) eine Trennschicht (7) bzw. eine elektrisch isolierende Trennschicht (7) zwischengeschaltet ist.

6. Verbindungsaggregat nach einem der Ansprüche 3 bis 5, wobei die zumindest eine erste und/oder die zumindest eine zweite Heizleiterschicht (5, 6) aus metallischem Material bzw. im Wesentlichen aus metallischem Material besteht/bestehen und vorzugsweise als Metallfolie bzw. als Metallfilm ausgebildet ist/sind.

7. Verbindungsaggregat nach einem der Ansprüche 3 bis 6, wobei die zumindest eine erste Heizleiterschicht (5) und/oder die zumindest eine zweite Heizleiterschicht (6) aus zumindest einem leitfähigen Polymer bzw. leitfähigen Kunststoff besteht/bestehen.

8. Verbindungsaggregat nach einem der Ansprüche 1 bis 7, wobei zumindest ein den ersten elektrischen Kontaktbereich (13) bildendes bzw. aufweisendes erstes Heizsegment (12) des zumindest einen ersten flächigen Heizleiters bzw. der zumindest einen ersten Heizleiterschicht (5) im Verbindungsabschnitt (11) der Rohrleitung (2) an der Außenoberfläche der Rohrleitung (2) bzw. des Verbindungsabschnittes (11) angeordnet ist.

9. Verbindungsaggregat nach einem der Ansprüche 1 bis 8, wobei zumindest ein den zweiten elektrischen Kontaktbereich (15) bildendes bzw. aufweisendes zweites Heizsegment (14) des zumindest einen zweiten flächigen Heizleiters bzw. der zumindest einen zweiten Heizleiterschicht (6) im Verbindungsabschnitt (11) der Rohrleitung (2) an der Außenoberfläche der Rohrleitung (2) bzw. des Verbindungsabschnittes (11) angeordnet ist.

10. Verbindungsaggregat nach einem der Ansprüche 1 bis 9, wobei im Verbindungsabschnitt (11) der Rohrleitung (2) das erste Heizsegment (12) des ersten flächigen Heizleiters bzw. der ersten Heizleiterschicht (5) und das zweite Heizsegment (14) des zweiten flächigen Heizleiters bzw. der zweiten Heizleiterschicht (6) stufenförmig angeordnet sind.

11. Verbindungsaggregat nach einem der Ansprüche 1 bis 10, wobei beim Einschieben bzw. beim Einstecken des Dorns (17) der erste Kontaktbereich (13) bzw. das erste Heizsegment (12) und der zweite Kontaktbereich (15) bzw. das zweite Heizsegment (14) nach außen gedrückt bzw. geschoben wird, so dass der elektrische Berührungskontakt mit den elektrischen Kontaktstellen (18, 19) des Verbinders (3) bzw. der Verbindungshülse (20) ermöglicht bzw. erleichtert wird.

12. Verbindungsaggregat nach einem der Ansprüche 1 bis 11, wobei der Verbinder (3) eine Ringnut (22) aufweist, in welche Ringnut (22) die Rohrleitung (2) bzw. der Verbindungsabschnitt (11) der Rohrleitung (2) beim Herstellen der Verbindung zwischen Verbinder (3) und Rohrleitung (2) einschiebbar ist und wobei an der rohrleitungsseitigen bzw. verbindungsabschnittseitigen Innenoberfläche der Ringnut (22) die zumindest eine elektrische Kontaktstelle (18, 19) des Verbinders (3) bzw. die elektrischen Kontaktstellen (18, 19) des Verbinders (3) angeordnet ist/sind.

13. Verbindungsaggregat nach einem der Ansprüche 1 bis 12, wobei zur Herstellung eines elektrischen Berührungskontaktes eine Verbindungshülse (20) auf den Verbindungsabschnitt (11) der Rohrleitung (2) aufschiebbar bzw. aufsteckbar ist, wobei an der verbindungsabschnittseitigen Innenseite (26) der Verbindungshülse (20) die zumindest eine elektrische Kontaktstelle (18, 19) bzw. die elektrischen Kontaktstellen (18, 19) angeordnet ist/sind, die beim Aufschieben bzw. Aufstecken mit dem zumindest einen elektrischen Kontaktbereich (13, 15) bzw. mit den elektrischen Kontaktbereichen (13, 15) des Verbindungsabschnittes (11) in elektrischen Berührungskontakt kommt/kommen.

14. Verbindungsaggregat nach einem der Ansprüche 1 bis 13, wobei die zumindest eine elektrische Kontaktstelle (18, 19) bzw. die elektrischen Kontaktstellen (18, 19) des Verbinders (3) und/oder der Verbindungshülse (20) mit zumindest einem entlang des Verbinders (3) verlaufenden und den Verbinder (3) beheizenden Verbinderheizleiter verbunden ist/sind, wobei sich der bzw. die Verbinderheizleiter vorzugsweise über zumindest den Großteil der Länge des Verbinders (3) erstreckt/erstrecken.

15. Verbindungsaggregat nach einem der Ansprüche 1 bis 14, wobei zumindest ein in dem Verbinder (3) angeordneter und zur Beheizung des Verbinders (3) vorgesehener Verbinderheizleiter als Verbinderheizleiterschicht (23, 24) ausgebildet ist, die bevorzugt über den Großteil des Verbinderumfangs und empfohlenermaßen über den gesamten Verbinderumfang umläuft.

16. Verbindungsaggregat nach einem der Ansprüche 1 bis 15, wobei beim Herstellen der Verbindung zwischen Rohrleitung (2) und Verbinder (3) der elektrische Berührungskontakt zwischen dem Kontaktbereich (13, 15) bzw. den Kontaktbereichen (13, 15) der Rohrleitung (2) und der Kontaktstelle (18, 19) bzw. den Kontaktstellen (18, 19) des Verbinders (3) bzw. der Verbindungshülse (20) durch Zusammenschieben bzw. Zusammenstecken von Rohrleitung (2) und Verbinder (3) und gegebenenfalls Verbindungshülse (20) realisiert wird.

17. Verbindungsaggregat nach einem der Ansprüche 1 bis 16, wobei der zumindest eine flächige Heizleiter bzw. die flächigen Heizleiter, insbesondere die zumindest eine Heizleiterschicht (5, 6) bzw. die Heizleiterschichten (5, 6) durch Aufdrucken mittels eines Druckverfahrens auf der Rohrleitung aufgebracht ist/sind.

18. Verbindungsaggregat nach einem der Ansprüche 14 bis 17, wobei der zumindest eine Verbinderheizleiter bzw. die Verbinderheizleiter, insbesondere die zumindest eine Verbinderheizleiterschicht (23, 24) bzw. die Verbinderheizleiterschichten (23, 24) durch Aufdrucken mittels eines Druckverfahrens auf dem Verbinder aufgebracht ist/sind.

19. Verbindungsaggregat nach einem der Ansprüche 1 bis 18, wobei die Verbindungshülse (20) in Form einer zumindest bereichsweise elektrisch leitfähigen Klemme oder Klammer ausgebildet ist.

## Claims

1. A connection unit (1) comprising a heatable motor vehicle pipeline (2) for the passage of a fluid medium and a heatable connector (3) for the connection to the motor vehicle pipeline (2), wherein the pipeline (2) comprises at least one flat heating conductor, wherein the at least one heating conductor extends over the length of the pipeline (2) or extends substantially over the length of the pipeline (2) and extends into a connecting portion (11) of the pipeline (2) for the connection to the connector (3),
wherein the at least one flat heating conductor comprises an electrical contact region (13, 15) at the connecting portion (11) of the pipeline (2) and wherein, when the pipeline (2) is connected to the connector (3) or when pipeline (2) and connector (3) are pushed together and/or plugged together, the electrical contact region (13, 15) of the pipeline (2) comes into electrically conductive physical contact with an electrical contact point (18, 19) of the connector (3) or a connecting sleeve (20) applied to or on the connecting portion (11) during the connection of the pipeline (2) and the connector (3),
wherein, when the connection is produced between connector (3) and pipeline (2), a mandrel (17) of the connector (3) can be pushed or plugged into the interior of the pipeline (2),
wherein, when the mandrel (17) is pushed or plugged in, the contact region (13, 15) is pressed or curved outwards, so that the electrical physical contact of the contact region with the electrical contact points of the connector or of the connecting sleeve is enabled or facilitated
and wherein the mandrel (17) comprises sawtooth-shaped profiling (21) at its outer side, wherein the sawtooth-like profiling (21) assists or simplifies the pressing or pushing of the first and/or the second contact region (13, 15) outwards.

2. The connection unit according to claim 1, wherein the pipeline (2) comprises an inner layer (4), which is in contact with the fluid medium conveyed through the pipeline (2), wherein the pipeline (2) preferably comprises at least one outer layer (8) and wherein the at least one flat heating conductor is disposed between the inner layer (4) and the outer layer (8).

3. The connection unit according to any one of claims 1 or 2, wherein the at least one flat heating conductor is constituted as a heat-conducting layer (5, 6) of the pipeline (2), wherein the heat-conducting layer (5, 6) runs around at least a part of the circumference of the pipeline (2) and, according to an embodiment, runs around the entire circumference of the pipeline (2).

4. The connection unit according to any one of claims 1 or 3, wherein the pipeline (2) comprises at least one first flat heating conductor and at least one second flat heating conductor, wherein the two heating conductors extend over the length of the pipeline (2) or extend substantially over the length of the pipeline (2) and extend into the connecting portion (11) of the pipeline (2) for the connection to the connector (3), wherein the two heating conductors each comprise an electrical contact region (13, 15) at the connecting portion (11) of the pipeline (2) and wherein, when the pipeline (2) is connected to the connector (3) or when pipeline (2) and connector (3) are pushed together and/or plugged together, the two electrical contact regions (13, 15) of the pipeline (2) come into electrically conductive physical contact with at least two electrical contact points (18, 19) of the connector (3) or a connecting sleeve (20) applied to or on the connecting portion (11) during the connection of the pipeline (2) and the connector (3).

5. The connection unit according to claim 4, wherein a separating layer (7) or an electrically insulating separating layer (7) is interposed between the first flat heating conductor or between the first heat-conducting layer (5) and the second flat heating conductor or the second heat-conducting layer (6).

6. The connection unit according at any one of claims 3 to 5, wherein the at least one first and/or the at least one second heat-conducting layer (5, 6) is/are made of metallic material or essentially of metallic material and is/are preferably constituted as metal foil or as metal film.

7. The connection unit according at any one of claims 3 to 6, wherein the at least one first heat-conducting layer (5) and/or the at least one second heat-conducting layer (6) is/are made of at least one conductive polymer or conductive plastic.

8. The connection unit according at any one of claims 1 to 7, wherein at least one first heating segment (12) of the at least one first flat heating conductor or of the at least one first heat-conducting layer (5), said first heating segment forming or comprising the first electrical contact region (13), is disposed in the connecting portion (11) of the pipeline (2) at the outer surface of the pipeline (2) or of the connecting portion (11).

9. The connection unit according at any one of claims 1 to 8, wherein at least one second heating segment (14) of the at least one second flat heating conductor or of the at least one second heat-conducting layer (6), said second heating segment forming or comprising the second electrical contact region (15), is disposed in the connecting portion (11) of the pipeline (2) at the outer surface of the pipeline (2) or of the connecting portion (11).

10. The connection unit according at any one of claims 1 to 9, wherein the first heating segment (12) of the first flat heating conductor or of the first heat-conducting layer (5) and the second heating segment (14) of the second flat heating conductor or of the second heat-conducting layer (6) are disposed in a stepped manner in the connecting portion (11) of the pipeline (2).

11. The connection unit according at any one of claims 1 to 10, wherein the first contact region (13) or the first heating segment (12) and the second contact region (15) or the second heating segment (14) is pressed or pushed outwards when the mandrel (17) is pushed or plugged in, so that the electrical physical contact with the electrical contact points (18, 19) of the connector (3) or of the connecting sleeve (20) is enabled or facilitated.

12. The connection unit according at any one of claims 1 to 11, wherein the connector (3) comprises an annular groove (22), into which annular groove (22) the pipeline (2) or the connecting portion (11) of the pipeline (2) can be pushed when the connection between connector (3) and pipeline (2) is produced and wherein the at least one electrical contact point (18, 19) of the connector (3) or the electrical contact points (18, 19) of the connector (3) is/are disposed at the inner surface of the annular groove (22) on the pipeline side or the connecting portion side.

13. The connection unit according at any one of claims 1 to 12, wherein a connecting sleeve (20) can be pushed or plugged onto the connecting portion (11) of the pipeline (2) to produce an electrical physical contact, wherein the at least one electrical contact point (18, 19) or the electrical contact points (18, 19) is/are disposed at the inner side (26) of the connecting sleeve (20) at the connecting portion side, said contact point or contact points coming into electrical physical contact with the at least one electrical contact region (13, 15) or with the electrical contact regions (13, 15) of the connecting portion (11) when the pushing-on or plugging-on takes place.

14. The connection unit according at any one of claims 1 to 13, wherein the at least one electrical contact point (18, 19) or the electrical contact points (18, 19) of the connector (3) and/or of the connecting sleeve (20) is/are connected to at least one connector heating conductor running along the connector (3) and heating the connector (3), wherein the connector heating conductor or connector heating conductors preferably extends/extend over at least the major part of the length of the connector (3).

15. The connection unit according at any one of claims 1 to 14, wherein at least one connector heating conductor disposed in the connector (3) and provided for heating the connector (3) is constituted as a connector heat- conducting layer (23, 24), which preferably runs around the major part of the connector circumference and, advisedly, around the entire connector circumference.

16. The connection unit according at any one of claims 1 to 15, wherein, when the connection is produced between the pipeline (2) and the connector (3), the electrical physical contact between the contact region (13, 15) or the contact regions (13, 15) of the pipeline (2) and the contact point (18, 19) or the contact points (18, 19) of the connector (3) or of the connecting sleeve (20) is produced by the pushing together or plugging together of pipeline (2) and connector (3) and, if applicable, connecting sleeve (20).

17. The connection unit according at any one of claims 1 to 16, wherein the at least one flat heating conductor or the flat heating conductors, in particular the at least one heat-conducting layer (5, 6) or the heat-conducting layers (5, 6), is/are applied by printing on the pipeline by means of a printing process.

18. The connection unit according at any one of claims 14 to 17, wherein the at least one connector heating conductor or the connector heating conductors, in particular the at least one connector heat-conducting layer (23, 24) or the connector heat-conducting layers (23, 24), is/are applied by printing on the connector by means of a printing process.

19. The connection unit according at any one of claims 1 to 18, wherein the connecting sleeve (20) is constituted in the form of a clamp or clip which is electrically conductive at least in sections.

## Revendications

1. Ensemble de raccordement (1) composé d'une conduite chauffable de véhicule automobile (2) pour faire passer un milieu fluide et d'un raccord (3) pour le raccordement avec la conduite de véhicule automobile (2), la conduite (2) comportant au moins un conducteur chauffant mince, au moins un conducteur chauffant s'étendant sur la longueur de la conduite (2) ou s'étendant pour l'essentiel sur la longueur de la conduite (2) et s'étendant jusque dans une section de raccordement (11) de la conduite (2) pour le raccordement avec le raccord (3),
au moins un conducteur chauffant mince sur la section de raccordement (11) de la conduite (2) comportant une zone de contact électrique (13, 15) et lors du raccordement de la conduite (2) au raccord (3) ou lors du télescopage et/ou de l'emboîtement de la conduite (2) et du raccord (3), la zone de contact électrique (13, 15) de la conduite (2) vient en contact électroconducteur avec un point de contact électrique (18, 19) du raccord (3) ou un manchon de raccordement (20) appliqué au ou sur la section de raccordement (11) au cours du raccordement de la conduite (2) et du raccord (3),
lors de l'établissement de la liaison entre le raccord (3) et la conduite (2), une broche (17) du raccord (3) peut être insérée ou emboîtée à l'intérieur de la conduite (2),
lors de l'insertion ou de l'emboîtement de la broche (17), la zone de contact (13, 15) étant comprimée ou courbée vers l'extérieur de sorte que le contact électrique de la zone de contact est possible ou facilité avec les points de contact électriques du raccord ou du manchon de raccordement,
et la broche (17) comportant sur son côté extérieur des profilages en forme de dents de scie (21), les profilages en forme de dents de scie (21) facilitant ou simplifiant la compression ou le glissement de la première et/ou de la deuxième zone de contact (13, 15) vers l'extérieur,

2. Ensemble de raccordement selon la revendication 1, la conduite (2) comportant une couche intérieure (4), qui est en contact avec le milieu fluide guidé à travers la conduite (2), la conduite (2) comportant de préférence au moins une couche extérieure (8) et au moins un conducteur chauffant mince étant disposé entre la couche intérieure (4) et la couche extérieure (8).

3. Ensemble de raccordement selon l'une quelconque des revendications 1 ou 2, au moins un conducteur chauffant mince étant constitué comme couche de conducteur chauffant (5, 6) de la conduite (2), la couche de conducteur chauffant (5, 6) entourant au moins une partie de la périphérie de la conduite (2) et passant autour sur toute la périphérie de la conduite (2) selon une forme d'exécution.

4. Ensemble de raccordement selon l'une quelconque des revendications 1 à 3, la conduite (2) comportant au moins un premier conducteur chauffant mince et au moins un deuxième conducteur chauffant mince, les deux conducteurs chauffants s'étendant sur la longueur de la conduite (2) ou s'étendant pour l'essentiel sur la longueur de la conduite (2) et s'étendant jusque dans une section de raccordement (11) de la conduite (2) pour le raccordement avec le raccord (3), les deux conducteurs chauffants sur la section de raccordement (11) de la conduite (2) comportant respectivement une zone de contact électrique (13, 15) et lors du raccordement de la conduite (2) avec le raccord (3) ou lors du télescopage et/ou de l'emboîtement de la conduite (2) et du raccord (3), les deux zones de contact électriques (13, 15) de la conduite (2) venant en contact électroconducteur avec au moins deux points de contact électriques (18, 19) du raccord (3) ou un manchon de raccordement (20) appliqué à ou sur la section de raccordement (11) au cours du raccordement de la conduite (2) et du raccord (3).

5. Ensemble de raccordement selon la revendication 4, une couche de séparation (7) ou une couche de séparation électriquement isolante (7) étant intercalée entre le premier conducteur chauffant mince ou entre la première couche de conducteur chauffant (5) et le deuxième conducteur chauffant mince ou la deuxième couche de conducteur chauffant (6).

6. Ensemble de raccordement selon l'une quelconque des revendications 3 à 5, au moins une première et/ou au moins une deuxième couche de conducteur chauffant (5, 6) étant constituée d'un matériau métallique ou pour l'essentiel d'un matériau métallique et de préférence constituée sous forme de feuille métallique ou sous forme de film métallique.

7. Ensemble de raccordement selon l'une quelconque des revendications 3 à 6, au moins une première couche de conducteur chauffant (5) et/ou au moins une deuxième couche de conducteur chauffant (6) étant composée au moins d'un polymère conducteur ou d'une matière plastique conductrice.

8. Ensemble de raccordement selon l'une quelconque des revendications 1 à 7, au moins un premier segment chauffant (12) formant ou comportant la première zone de contact électrique (13) d'au moins un premier conducteur chauffant mince ou d'au moins une première couche de conducteur chauffant (5) est disposé dans la section de raccordement (11) de la conduite (2) sur la surface extérieure de la conduite (2) ou de la section de raccordement (11).

9. Ensemble de raccordement selon l'une quelconque des revendications 1 à 8, au moins un deuxième segment chauffant (14) formant ou comportant la deuxième zone de contact électrique (15) d'au moins un deuxième conducteur chauffant mince ou d'au moins une deuxième couche de conducteur chauffant (6) est disposé dans la section de raccordement (11) de la conduite (2) sur la surface extérieure de la conduite (2) ou de la section de raccordement (11).

10. Ensemble de raccordement selon l'une quelconque des revendications 1 à 9, le premier segment chauffant (12) du premier conducteur chauffant mince ou de la première couche de conducteur chauffant (5) et le deuxième segment chauffant (14) du deuxième conducteur chauffant mince ou de la deuxième couche de conducteur chauffant (6) étant disposés dans la section de raccordement (11) de la conduite (2).

11. Ensemble de raccordement selon l'une quelconque des revendications 1 à 10, lors de l'insertion ou de l'emboîtement de la broche (17), la première zone de contact (13) ou le premier segment chauffant (12) et la deuxième zone de contact (15) ou le deuxième segment chauffant (14) étant comprimé ou poussé vers l'extérieur de manière à permettre ou faciliter le contact électrique avec les points de contact électriques (18, 19) du raccord (3) ou du manchon de raccordement (20).

12. Ensemble de raccordement selon l'une quelconque des revendications 1 à 11, le raccord (3) comportant une rainure annulaire (22), rainure annulaire (22) dans laquelle la conduite (2) ou la section de raccordement (11) de la conduite (2) pouvant être insérée lors de l'établissement du raccordement entre le raccord (3) et la conduite (2) et au moins un point de contact électrique (18, 19) du raccord (3) ou les points de contact électriques (18, 19) du raccord (3) étant disposés sur la surface intérieure côté conduite ou côté section de raccordement de la rainure annulaire (22).

13. Ensemble de raccordement selon l'une quelconque des revendications 1 à 12, un manchon de raccordement (20) pouvant être inséré ou emboîté sur la section de raccordement (11) de la conduite (2) pour établir un contact électrique, au moins un point de contact électrique (18, 19) ou les points de contact électriques (18, 19) étant disposés sur le côté intérieur du côté de la section de raccordement (26) du manchon de raccordement (20), qui vient/viennent en contact électrique lors de l'insertion ou de l'emboîtement avec au moins une zone de contact électrique (13, 15) ou avec les zones de contacts électriques (13, 15) de la section de raccordement (11).

14. Ensemble de raccordement selon l'une quelconque des revendications 1 à 13, au moins un point de contact électrique (18, 19) ou les points de contact électriques (18, 19) du raccord (3) et/ou du manchon de raccordement (20) étant reliés avec au moins un conducteur chauffant de raccord passant le long du raccord (3) et chauffant le raccord (3), le ou les conducteur(s) chauffant(s) de raccord s'étendant de préférence sur au moins la majeure partie de la longueur du raccord (3).

15. Ensemble de raccordement selon l'une quelconque des revendications 1 à 14, au moins un conducteur chauffant de raccord disposé dans le raccord (3) et pour chauffer le raccord (3) étant configuré sous la forme d'une couche de conducteur chauffant de raccord (23, 24), qui passe de préférence autour de la majeure partie de la périphérie du raccord et de façon recommandée sur toute la périphérie du raccord.

16. Ensemble de raccordement selon l'une quelconque des revendications 1 à 15, lors de l'établissement du raccordement entre la conduite (2) et le raccord (3), le contact électrique entre la zone de contact (13, 15) ou les zones de contact (13, 15) de la conduite (2) et du point de contact (18, 19) ou des points de contact (18, 19) du raccord (3) ou du manchon de raccordement (20) est réalisé grâce au télescopage ou à l'emboîtement de la conduite (2) et du raccord (3) et le cas échéant du manchon de raccordement (20).

17. Ensemble de raccordement selon l'une quelconque des revendications 1 à 16, au moins un conducteur chauffant mince ou les conducteurs chauffants minces, en particulier au moins une couche de conducteur chauffant (5, 6) ou les couches de conducteur chauffant (5, 6) est/sont appliqué(s) sur la conduite par pression au moyen d'un procédé de pression.

18. Ensemble de raccordement selon l'une quelconque des revendications 14 à 17, au moins un conducteur chauffant de raccord ou les conducteurs chauffants de raccord, en particulier au moins une couche de conducteur chauffant de raccord (23, 24) ou les couches de conducteur chauffant de raccord (23, 24) est/sont appliqué(s) sur le raccord par pression au moyen d'un procédé de pression.

19. Ensemble de raccordement selon l'une quelconque des revendications 1 à 18, le manchon de raccordement (20) étant configuré sous la forme d'une pince ou d'une attache.
